(19) Europäisches Patentamt
European Patent Office
Office européen des brevets

(11) **EP 1 837 130 B1**

(12) **EUROPÄISCHE PATENTSCHRIFT**

(45) Veröffentlichungstag und Bekanntmachung des Hinweises auf die Patenterteilung:
**02.01.2013  Patentblatt 2013/01**

(51) Int Cl.:
*B25G 1/10* *(2006.01)*     *B29C 45/16* *(2006.01)*
*B29C 45/14* *(2006.01)*

(21) Anmeldenummer: **07005455.6**

(22) Anmeldetag: **16.03.2007**

(54) **Handgriff für ein Werkzeug**

Handle for a tool

Poignée pour un outil

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **16.03.2006  DE 102006012576
10.05.2006  DE 102006022019
11.08.2006  DE 102006037688**

(43) Veröffentlichungstag der Anmeldung:
**26.09.2007  Patentblatt 2007/39**

(73) Patentinhaber: **Felo-Werkzeugfabrik Holland-Letz GmbH
35279 Neustadt (DE)**

(72) Erfinder:
• **Holland-Letz, Horst
35279 Neustadt (DE)**
• **Holland-Letz, Martin
35279 Neustadt (DE)**

(74) Vertreter: **Rehberg Hüppe + Partner
Patentanwälte
Nikolausberger Weg 62
37073 Göttingen (DE)**

(56) Entgegenhaltungen:
**EP-A- 1 136 219     EP-A- 1 314 519
EP-A1- 0 727 289     WO-A-03/078108**

**Beschreibung**

## TECHNISCHES GEBIET DER ERFINDUNG

Die Erfindung betrifft einen Handgriff für ein Werkzeug. Insbesondere betrifft die Erfindung einen Handgriff für ein Werkzeug, mit dem ein Torsionsmoment übertragen werden soll, wie beispielsweise ein Schraubendreher.

## STAND DER TECHNIK

Gestaltungs- und Bewertungskriterien für Griffe für Werkzeuge sind insbesondere

- die Herstellungskosten des Griffes,

- das Gewicht des Griffes,

- das Anpassungsvermögen des Griffes an eine Hand und u. U. unterschiedliche Handgrößen und Kräfte unterschiedlicher Benutzer des Griffes und/oder

- das Übertragungsvermögen für Kräfte und Momente, insbesondere Torsionsmomente für ein ein Torsionsmoment übertragendes Werkzeug wie ein Schraubendreher.

Aus dem Stand der Technik ist eine Vielzahl von Ausgestaltungsformen für Griffe für Werkzeuge und für deren Herstellungsverfahren bekannt:

**Griffe insbesondere für Schraubendreher**

US-PS 2,871,899 betrifft eine erste Weiterentwicklung eines Griffs für ein Werkzeug wie einen Schraubendreher aus Hartkunststoff mit dem Ziel einer Verbesserung der Haptik des Griffes. Demgemäß wird auf einen Griffkern ein vorgefertigter Griffmantel aus weichem Kunststoff aufgezogen. Griffkern und Griffmantel sind zur Übertragung eines Torsionsmoments in Umfangsrichtung formschlüssig über Profilierungen miteinander verbunden. Der Einsatz des weichen Kunststoffs verbessert die Griffigkeit des Griffs. Bei einer praktischen Erprobung des bekannten Griffs hat sich jedoch gezeigt, dass der weiche Griffmantel bei schweren Beanspruchungen von dem harten Griffkern abhebt und Falten bilden kann. Dieses "Walken" genannte Abheben des Griffmantels von dem Griffkern führt insbesondere bei Dauerbenutzung des bekannten Griffs zu einer schmerzhaften Blasenbildung im Bereich der Handfläche des Benutzers und zu einer Entzündungen verursachenden überhöhten Belastung der Handknochen.
Zur Vermeidung der vorgenannten Nachteile ist im Folgenden vorgeschlagen worden, den Griffkern stoffschlüssig mit dem Griffmantel zu verbinden, wobei der weiche Kunststoff

- hierbei lediglich in Umfangsrichtung verteilte Teilbereiche des Griffmantels bildet oder

- in Umfangsrichtung geschlossen den Griffkern umgibt,

vgl. insbesondere DE 92 02 550 U1, DE 43 04 965 A1, DE 295 15 833 U1, DE 195 39 200 A1, DE 295 17 276 U1, DE 299 00 746 U1, DE 299 04 082 U1.
Bei derartigen Griffen aus zwei Kunststoff-Komponenten ist in einem Griffkern aus Hartkunststoff, dem ersten Griffbereich, das Werkzeug verankert. Ein derartiger Griffkern wird anschließend mit einem Griffmantel aus weichem Kunststoff umspritzt, vgl. bspw. EP 0 627 974 B1, der auch als zweiter Griffbereich bezeichnet wird. Der Griffmantel aus weichem Kunststoff hat eine gewisse Elastizität und vermittelt ein angenehmeres Greifgefühl als ein Griff, der nur aus Hartkunststoff hergestellt ist. Der weiche Kunststoff hat außerdem u. U. einen höheren Reibungskoeffizienten als Hartkunststoff. Deshalb können mit einem derartigen "2-Komponenten-Griff" u. U. höhere Torsionsmomente übertragen werden als mit einem Griff gleicher Größe aus Hartkunststoff. Dies ist von Bedeutung bei Griffen für Schraubendreher, Schraubzwingen, etc.
US 2,871,899 offenbart einen Griff zur Übertragung eines Torsionsmoments mit einem Griffkern, in dessen Längsbohrung reibschlüssig ein Schaft des Werkzeugs einpressbar ist. Der Griffkern besitzt eine zylinderförmige Mantelfläche, auf die eine Hülse mit einem ungefähr gleichen inneren Durchmesser aufgeschoben werden kann und dort reibschlüssig gehalten ist. Das Material der Hülse ist weicher und stärker dämpfend als das Material des Griffkerns. Hierzu findet beispielsweise ein dämpfendes, gummiähnliches Material mit einer Härte von zwischen 40 und 90 Shore A Einsatz, insbesondere ein Neopren-Gummi mit einer Härte zwischen 55 und 70 Shore A und einer Zugfestigkeit zwischen 1500 und 2000 Pfund/Inch$^2$ mit einer Dehnung von ungefähr 350 %. Abweichend von einer reibschlüssigen Verbindung zwischen Hülse und Griffkern kann zusätzlich ein Kleber eingesetzt werden oder ein elastischer Formschluss in Längsrichtung eingesetzt werden. Die Hülse kann ein Spritzguss-Bauelement sein. Weiterhin können zur Erzielung eines Formschlusses in Umfangsrichtung die Außenfläche des Griffkerns und die Innenfläche der Hülse mit in Längsrichtung verlaufenden Nuten, Vorsprüngen oder Zähnen ausgestattet sein.

DE 694 21 765 T2 (EP 0 635 337 B1) geht aus von einem Stand der Technik, bei dem auf dem Schaft eines Schraubendrehers aufeinander folgende Schichten aus Kunststoffmaterialien angeformt werden. Eine zentrale Schicht, in welcher der Schaft des Schraubendrehers eingebettet ist, wird als erstes geformt, und die Schicht, welche die Peripherie des Griffs begrenzt, wird auf diese zentrale Schicht oder auf Zwischenschichten aufgeformt. Für derartige Formvorgänge werden Spritzpressen verwendet mit mehreren Spritzköpfen, üblicherweise mit zwei oder drei derartigen Köpfen. Hiervon ausgehend schlägt die Druckschrift vor, einen Schaft eines Schraubendrehers in einen Kunststoffgriff einzubetten. Ein vorderer Bereich der Mantelfläche des Griffs ist von einer Kunststoffhülse gebildet. Die Kunststoffhülse ist mit zwei koaxial ineinander liegenden Teilen mit ringförmigen Querschnitten gebildet, wobei zunächst das innenliegende Teil mit einem Spritzgießverfahren hergestellt wird und auf dieses Teil das andere, die Mantelfläche bildende Teil mit einem Spritzgießverfahren aufgeformt wird. Zur formschlüssigen Verbindung der beiden Teile in der Kunststoffhülse besitzen die Teile komplementäre Vorsprünge und Ausnehmungen. Die Hülse wird mit einer herkömmlichen Presse mit zwei Spritzköpfen hergestellt. In einem darauf folgenden Verfahrensschritt wird in einer derartigen Hülse unter Ausbildung eines radialen Zwischenraums ein Schaft angeordnet. In eine geeignete Form wird dann ein Kunststoffmaterial derart eingespritzt, dass dieses den Zwischenraum im Inneren der Hülse, einen balligen Endbereich des Griffs und einen endseitigen Mantelbereich radial außenliegend von einem Endbereich der Hülse ausfüllt. Das innere Teil der Hülse ist mit einem härteren Kunststoff gebildet als das äußere Teil der Hülse. Das Ergebnis ist ein marktüblicher 2-Komponenten-Griff, der eine relativ dünne Außenschicht aus elastischem Kunststoff und einen Griffkern aus Hartkunststoff aufweist, aber sich nicht unter Einwirkung einer Handkraft verformt.

EP 1 314 519 A1 betrifft ebenfalls Griffe für Schraubendreher. Bei diesen ist der Schaft in einen Griffkern aus einem relativ harten Kunststoff eingebettet. Der Griffkern ist zumindest teilweise mit einem verformbaren Elastomermaterial ummantelt. Zur Verhinderung einer Verletzung des verformbaren Materials der Ummantelung ist die Ummantelung mit einem dünnen Überzug überzogen, der eine Schutzschicht und eine Schicht zum Zusammenhalten der elastomeren Ummantelung bildet. Alternativ zum Einsatz eines Elastomermaterials für die verformbare Ummantelung kann ein Gelmaterial Einsatz finden. Weiterhin offenbart die Druckschrift die Anordnung der verformbaren Umhüllung, hier eines Gelkissens, in einer Hülse mit einer geschlossenen Umhüllung. Eine derartige Hülse soll auf einen Schaufelstiel oder einen Hammerstiel aufgeschoben werden, um hier einen Griff zu bilden. Durch eine zumindest teilweise Verformbarkeit der Griffoberfläche soll ermöglicht werden, dass der Griff nachgibt, wenn beispielsweise ein Benutzer an einer bestimmten Stelle stärker zugreift als an einer anderen. Auch wenn die Hand des Benutzers von der Standardform und Standardgröße abweicht, kann auf diese Weise ein besseres Fassen und Behandeln des Griffs durchgeführt werden. Wie groß die Nachgiebigkeit der Ummantelung ausgeführt wird, hängt von den Umständen des Einzelfalls und von der Art des Griffs bzw. der Art des Werkzeugs ab, das mit diesem Griff benutzt werden soll. Die Verformbarkeit des Griffs kann sich beispielsweise über den gesamten Bereich des Griffelements erstrecken, an dem ein Benutzer angreift. Ebenfalls möglich ist, dass die Verformbarkeit auf einen Teil der Griffoberfläche begrenzt ist, beispielsweise auf den Teil, an dem der Benutzer mit der Handinnenfläche angreift, während die Teile des Griffs, an denen der Benutzer mit den Fingerspitzen angreift, nicht verformbar ausgebildet sind. Eine solche Gestaltung der Griffoberfläche bietet sich beispielsweise bei Schraubendrehern an, bei denen bestimmte Bereiche der Griffoberfläche so ausgebildet sind, dass sie zum schnellen Drehen des Werkzeugs mit den Fingerspitzen gedacht sind. Die Verformbarkeit der Griffoberfläche soll hierbei auf eine bestimmte Tiefe unterhalb der Griffoberfläche begrenzt sein. Innen soll ein harter Griffkern vorhanden sein, der nicht nur zur Verbindung mit dem Schaft dienen kann, sondern auch einen festen Halt für die Übertragung der Bewegung von der Hand auf das Werkzeug bieten soll. Die Dicke der verformbaren Schicht ist aber zu gering, um eine Anpassung des Griffes an die Hand des Benutzers zu ermöglichen.

DE 92 02 550 U1 der Anmelderin offenbart einen 2-Komponenten-Griff für einen Schraubendreher, der einen Griffkern aus einem Hartkunststoff, beispielsweise Polypropylen, besitzt, der in einer ersten Form mit eingelegtem Schaft hergestellt wird. In einer zweiten Form wird der Griffkern mit einem weichen Kunststoff, beispielsweise einem thermoplastischen Elastomer mit einer Endhärte von 60-80 Shore A, ummantelt. Zur Herstellung eines kuppelförmigen Bereichs wird in eine Form ein zylinderförmiges Formstück in axialer Richtung eingeführt, welches stirnseitig die Form der Kuppe vorgibt, so dass die gefertigte Kuppe nahtlos in die weitere Mantelfläche des Griffmantels übergeht (s. a. DE 43 04 965 A1). Auch dieser Griff ist ein heute marktüblicher 2-Komponenten-Griff, der keine Anpassungsmöglichkeit an die Hand eines Benutzers bietet.

DE 35 25 163 C2 offenbart einen Griff für Schraubendreher, in dem zunächst ein Schaft mit einem Griffkern aus einem Hartkunststoff ummantelt ist. Eine endseitige, kalottenförmige Kuppe aus Hartkunststoff kann separat geformt und nachträglich mit dem Griffkern verbunden sein oder an den Griffkern angeformt werden. Eine Mehrteiligkeit empfiehlt sich, wenn die Kuppe noch aus einem härteren Material als der Griffkern bestehen soll. Bei mehrteiliger Ausgestaltung kann ein zentraler Zapfen der Kuppe in eine formentsprechende Ausnehmung des Griffkerns eintreten. Der Griffkern besitzt ungefähr mittig eine radiale Erweiterung, im Bereich welcher der Griffkern mit dem Hartkunststoff einen Teil der Mantelfläche des Griffs bildet. In axialer Richtung vor und hinter diesem Bereich liegende Teilbereiche der Mantelfläche sind mit einer Ummantelung des Griffkerns mit einem weichen Kunststoff gebildet, wobei die Erweiterung des Griffkerns vier axiale, in Umfangsrichtung verteilte Bohrungen besitzt, über die der vordere Teilbereich und der hintere Teilbereich der Mantelfläche aus weichem Kunststoff miteinander verbunden sind.

Weitere 2- oder Mehr-Komponenten-Griffe, insbesondere für Schraubendreher, bei denen zumindest ein axialer Teilbereich oder ein Teilumfang der Mantelfläche von einem auf einen harten Griffkern aufgespritzten weichen Kunststoff gebildet ist, sind beispielsweise aus DE 195 39 200 A1, DE 295 17 276 U1, EP 0 208 942 A2, DE 92 02 550 U1 oder DE 299 04 082 U1 bekannt.

EP 0 358 883 A1 offenbart einen Griff für einen Schraubendreher, bei dem sich eine vordere Hälfte und eine hintere Hälfte von einem mittigen Bereich maximalen Durchmessers kontinuierlich ohne Ausbildung von Hinterschneidungen verjüngen. Für eine derartige Ausgestaltung kann der Griff mit zwei Formhälften in einem Spritzgussverfahren hergestellt werden mit einer Teilungsfuge, die quer zu einer Längserstreckung der Schraubendreherachse gerichtet sein kann.

US 3,189,069 offenbart einen Schraubendreher mit einem reibschlüssig auswechselbar in einem Griffkern gehaltenen Schaft. Der Griffkern besitzt im Bereich seiner Mantelfläche in axialer Richtung verlaufende Rippen und Nuten. Weiterhin besitzt der Griffkern eine Umfangsnut. Auf den Griffkern ist in axialer Richtung ein Griffmantel aufgeschoben, wobei nach innen orientierte Fortsätze des Griffmantels in Umfangsrichtung formschlüssig in die Nuten des Griffkerns eingreifen. Der Griffmantel schnappt mit einem weiteren Fortsatz in die Umfangsnut ein, wodurch der Griffmantel gegenüber dem Griffkern gesichert ist. Neben dem erwähnten Formschluss liegen Teilsegmente des Griffmantels unter Ausbildung einer radialen Anpresskraft an dem Griffkern an, so dass ein Reibschluss gebildet ist. Für das Material des Griffmantels wird ein weicheres Material gewählt als für den Griffkern, beispielsweise Gummi.

Aus den Druckschriften WO 00/43166 und EP 1 163 088 B1 sind Griffe bekannt, bei denen durch eine asymmetrische Formgestaltung die ergonomischen Eigenschaften im Vergleich zu marktüblichen Griffen verbessert sein sollen. Nachteilig bei diesen bekannten Griffen ist, dass der Griffmantel aus weichem Kunststoff nur eine geringe Dicke besitzt und damit nur in einem geringen Maß nachgiebig ist. Hinsichtlich der Herstellung sind die Griffe in bestimmten Größen und Formen standardisiert, während die Hände der Benutzer verschiedene Größen und Maßverhältnisse haben. Deshalb ist insbesondere für unterschiedliche Hände von unterschiedlichen Benutzern eine optimale Ergonomie für derartige bekannte Griffe nicht gewährleistet. Bei Griffen für Schraubendreher kommt hinzu, dass bei einem Schrauben die Hand des Benutzers, die den Griff dreht, in Umfangsrichtung ihre Koppelstellung mit dem Griff laufend verändert. Der Griff kann deshalb nicht in einer optimalen ergonomischen Grundform ausgebildet werden, wie das bei den asymmetrischen Griffen gemäß WO 00/43166 und EP 1 163 088 B1 der Fall ist, bei denen die Hand im Gebrauch im Wesentlichen eine einzige Koppelstellung zu dem Griff haben kann.

## Griffe für Zangen

DE 20 2004 019 156 U1 beschreibt eine Zange mit zwei Zangenschenkeln mit zwei gleich ausgebildeten Griffen. Jeder Griff weist im Bereich der Mantelfläche drei Bereiche auf, die hintereinander liegend in Richtung des Endbereichs des Griffs zunehmende Härten besitzen. Der härteste Bereich bildet einen Griffkörper mit einer endseitigen Mantelfläche, auf den die anderen Teilbereiche zur Bildung der weiteren Bereiche der Mantelfläche aufgebracht sind. Während für den ersten Bereich ein hartes Material wie ein Hartplastik eingesetzt wird, welches in einem Spritzgussverfahren hergestellt sein kann, besteht der zweite Bereich aus einem weicheren Kunststoff. Der dritte Bereich ist mit einem Gelkissen ausgebildet. Der Schaft des Werkzeugs ist in den ersten Bereich eingebettet.

EP 0 538 632 A1 betrifft ebenfalls einen Griff für eine Zange, bei der ein Schaft eines Zangenschenkels über den außenliegenden Teilumfang mit einem weichen Kunststoff ummantelt ist, beispielsweise Polyvinylchlorid oder Polyethylen mit einer Härte zwischen 65-82 Shore A, insbesondere 66-70 Shore A, während der innenliegende Teilumfang mit einem formstabilen harten Kunststoff, insbesondere Zelluloseacetat oder Acrylnitril-Butadien-Styrol-Copolymere, ummantelt ist, beispielsweise mit einer Härte im Bereich von 85-92 Shore A, insbesondere 86-90 Shore A. Weiterhin ist es möglich, dass im Bereich des inneren Umfangs Einsätze vorgesehen sind, die ebenfalls entsprechend dem äußeren Umfangsbereich aus einem weichen Kunststoff bestehen, so dass in Umfangsrichtung ein harter Kunststoff und ein weicherer Kunststoff abwechselnd angeordnet sind.

Bei allen 2-Komponenten-Griffen, insbesondere für Schraubendreher, Kellen, Zangen, Feilen, Sägen usw. ist nach dem Stand der Technik die Außenschicht weicher als der Griffkern und verhältnismäßig dünn.

## Griffe für Schlagwerkzeuge

US 6,370,986 B1 geht von dem Stand der Technik aus, dass Hammer üblicherweise einen Griffkern aus einem harten Material wie einem Metall, einem Verbundmaterial oder einem synthetischen Material besitzen, der zur Bildung eines Griffs mit einer gummiartigen, verhältnismäßig harten Hülse umgeben ist. Offenbart ist ein manuell betätigtes Stoß- oder Schlagwerkzeug. Ein Griff besitzt eine innere Schicht sowie eine äußere Schicht. Die innere Schicht und die äußere Schicht bestehen aus gleichen Materialen, nämlich Polyvinylchlorid, Polypropylen oder ein thermoplastisches Elastomermaterial. Die äußere Schicht ist härter als die innere Schicht, aber kann ebenfalls flexibel oder dämpfend sein. Die unterschiedlichen Steifigkeiten der inneren Schicht und der äußeren Schicht werden nicht durch die verwendeten Materialien erzeugt, sondern dadurch, dass die innere Schicht geschäumt ist, während die äußere Schicht nicht geschäumt ist. Die Materialien für die innere und äußere Schicht sind geeignet gewählt, so dass diese chemisch kompatibel sind und ein Anhaften oder ein Fügen der Schichten möglich ist. Die innere Schicht dient einer Dämpfung eines auf einen Kopf des Schlagwerkzeugs aufgebrachten Stoßes oder Schlags bei dessen Kraftfluss zu der Hand eines Benutzers des Stoß- oder Schlagwerkzeugs. Weiterhin beschreibt die Druckschrift die für Stoß- und Schlagwerkzeuge spezifischen Probleme, die abweichend zu solchen von Torsionsmomentübertragungswerkzeugen sind. Das Schlagwerkzeug besitzt eine Seele, beispielsweise aus Metall, die unmittelbar und ohne Zwischenschaltung einer Zwischenschicht mit der geschäumten inneren Schicht verbunden ist, so dass mit Seele, innerer Schicht und äußerer Schicht ein dreischichtiger Aufbau gewählt ist. Die Seele ist im Querschnitt rechteckförmig ausgebildet mit Verdickungen im Endbereich, so dass vereinfacht gesprochen ein Doppel-T-Profil oder I-Profil gebildet ist. In dem Griff erstreckt sich die Seele teilweise lediglich mit den Verdickungen, also den Querschenkeln des Doppel-T-Profils, während der Längsschenkel des Doppel-T-Profils hier unterbrochen oder mit Zwischenräumen ausgebildet ist. In derartige Zwischenräume kann das Material der inneren Schicht eintreten. Die auskragenden Endbereiche des Doppel-T-Profils bilden Vibrationen aufnehmende Elemente. Die äußere Schicht besitzt radial nach innen orientierte, in Umfangsrichtung verteilte und sich in Längsrichtung des Griffs erstreckende Rippen, die in entsprechende Nuten des geschäumten Materials der inneren Schicht eintreten. Diese Rippen dienen einer Versteifung des Griffs und einer Steuerung einer Kompression der inneren Schicht gegen die Seele. Weiterhin besitzt die äußere Schicht sich über einen Teilumfang erstreckende Rippen, die die Funktion der in Längsrichtung orientierten Rippen weiter unterstützen sollen. Die Fertigung des Griffbereiches erfolgt in einem zweistufigen Spritzgussverfahren ("two shot", "double shot"-Spritzgussverfahren): Im ersten Verfahrensschritt wird die Seele in eine erste Form eingelegt und mit Polyvinylchlorid ausgeschäumt. In der Seele können Ausnehmungen angeordnet sein, in die in dem Spritzgussverfahren das geschäumte Material eintritt, wodurch die Wirkverbindung zwischen Seele und innerer Schicht verbessert werden kann. Anschließend wird die Seele mit der Ummantelung durch die erste Schicht in eine zweite Form eingelegt, in der dann in einem zweiten Spritzguss-Verfahrensschritt härteres Polyvinylchlorid eingespritzt wird. Für die innere Schicht ist eine Härte Shore A zwischen 45 und 65 Shore A, vorzugsweise 55 Shore A, angegeben, während die Härte der äußeren Schicht zwischen 66 und 76 Shore A, insbesondere 71 Shore A, beträgt. Vorteilhaft ist bei dem gewählten zweistufigen Spritzgussverfahren, dass während der Herstellung die Dimensionen der inneren Schicht und die Dicke der Wandung der äußeren Schicht präzise vorgegeben werden können. Eine Möglichkeit einer Fertigung des Griffs mit abweichenden Fertigungsmethoden, insbesondere ein Einsatz eines Monosandwich-Spritzgussverfahrens, ist ebenfalls pauschal angesprochen. Fraglich ist, ob das zweistufige Spritzgießverfahren zu einem Griff führt, bei dem die innere Schicht noch nachgiebig ist. Beim Aufspritzen der äußeren Schicht wirkt nämlich ein hydraulischer Druck auf die Oberfläche der inneren Schicht, der bei einem solchen Verfahren bei 600 bis 800 bar liegt. Unter einem solchen Druck wird eine geschäumte Schicht so zusammengepresst, dass sie nicht mehr porös ist. Dann ist sie nur noch so weit nachgiebig, wie es die Härte des verwendeten Kunststoffes zulässt. Eine Härte von 45 bis 65 Shore A ist aber schon zu hoch, um eine ausreichende Nachgiebigkeit zu bieten.

Aus US 3,770,033 ist ein Griff für einen Hammer bekannt. Der Griff ist als Integralschaum-Teil hergestellt. Bei einem derartigen Griff wird ein harter Kern, Stiel oder eine Seele des Hammers von dem aus Struktur-Schaum bestehenden eigentlichen Griffkörper umschlossen. Der Griffkörper wird im Querschnitt aus einer an der Seele anliegenden Schicht und einer äußeren Schicht mit relativ hoher Dichte und einer dazwischen liegenden Schicht mit geringer Dicke gebildet. Dieser Aufbau des Griffs ermöglicht eine elastische Querschnitts-Verformung des Griffs und dämpft Stöße beim Arbeiten mit dem Hammer. Die dünnen Schichten mit unterschiedlicher Dichte entstehen unter Einwirkung des Druckes, der im Inneren der Masse entsteht, wenn ein Treibmittel zur Porenbildung vergast und die Randschicht der Masse an die Wand der Formkavität gepresst und hier verdichtet wird. Zur Übertragung höherer Torsionsmomente, wie beispielsweise bei Schraubendrehern, ist ein derartiger Griff allerdings ungeeignet, da der Kern, auch in einer unrunden Querschnittsform, einen zu kleinen Durchmesser bzw. einen zu kleinen Hebelarm zur Erzeugung eines Torsionsmoments besitzt und die poröse Innenschicht alleine keine ausreichende Torsionssteifigkeit hat.

US 3,770,033 betrifft einen Griff eines Stoß- oder Schlagwerkzeugs wie einen Hammer, einen Vorschlaghammer, eine Hacke, eine Axt o. ä.. Ein Körper eines Griffs ist mit einem steifen Plastikschaum gebildet mit einer Dichte im Bereich von 35-45 Pfund/Fuß[3] und mit einem zentralen, verstärkten Griffkern. Der Körper des Griffs kann aus Plastikmaterial gebildet sein, beispielsweise Polyethylen, Polystyren, Polyurethan, Polypropylen. Plastikschaum wird in eine gewünschte Form um den Griffkern gespritzt, wobei der Körper des fertiggestellten Griffs durch eine Art Presspassung mit dem Griffkern ausbilden soll. Das formgebende Verfahren schafft inhärent Schichten, die eine Innenschicht und eine Außenschicht des Körpers bilden mit einer größeren Dichte als die Dichte von Zwischenbereichen zwischen den vorgenannten Schichten mit niedriger Dichte. Die Innen- und Außenschichten haben eine Dicke von gewöhnlicherweise zwischen 0,04 bis 0,05 Inch (1,016 bis 1,27 mm).

DE 101 13 368 A1 offenbart einen Griff für ein Schlagwerkzeug, bei dem zur Stoßabsorption der Schaft in einem Griff aus einem elastischen Material aufgenommen ist. Der Griff besitzt auf der Ober- und Unterseite in axialer Richtung orientierte, durchgehende Ausnehmungen, in die weitere, über die Mantelfläche des Griffs verteilte radial orientierte Ausnehmungen münden.

DE 197 32 421 C2 betrifft ebenfalls ein Schlagwerkzeug, bei dem sich von einem Endstück oberhalb und unterhalb des Schafts zwei Hohlfinger in axialer Richtung erstrecken, die von einer elastischen Griffhülle ummantelt sind. Über die Finger soll eine Stoßabsorption erreicht werden.

US 2003/0172498 A1 offenbart einen Griff, der Vibrationen für einen Einsatz bei einem Schlag-oder Stoßwerkzeug dämpfen soll. Auf einer Ober- sowie Unterseite des Griffs ist jeweils ein Kissen angeordnet, welches aus einer elastomeren Ummantelung und einem hierin eingeschlossenen Schaum besteht. Bei der elastomeren Ummantelung kann es sich um ein thermisches Plastik-Olefin, thermisches plastisches Gummi, thermische plastische Polyurethane, Polyvinylchlorid, steyrenische Block-Polymere und eine Kombination der vorgenannten Materialien handeln. Das Material wird in einem Spritzgussverfahren verarbeitet. Zur Herstellung der Kissen wird in einer Spritzgussmaschine das Elastomermaterial mit einem schäumenden Mittel gemischt. Die geschmolzene Mixtur wird dann in eine Form eingespritzt. Die kältere Temperatur der Form stellt während des Einspritzens eine Wärmesenke dar, so dass die Temperatur des Materials im Kontaktbereich mit der Form schneller abkühlt als im Inneren. Somit entsteht eine Art Haut aus nicht geschäumtem Elastomermaterial. Im Inneren bleibt die höhere Temperatur des Gemisches erhalten und führt zu einer Schaumbildung im Inneren, so dass der Schaum den innerhalb der Haut verfügbaren Raum ausfüllt. Wird der Griff aus der Form entfernt, kann bei geeigneter Temperaturgestaltung eine weitere Expansion des Schaums im Inneren der Haut zu einer Dehnung der Haut führen, was eine Verringerung der Wandstärke der nicht geschäumten Schicht zur Folge haben kann. Mit einer endgültigen Abkühlung härtet sowohl die Haut als auch der Schaum aus. Bei dem schäumenden Mittel kann es sich um feste Partikel, eine Flüssigkeit oder ein Gas handeln. Insbesondere ist das schaumbildende Mittel endotherm ausgebildet. Im Verhältnis zwischen dem Elastomermaterial und dem schaumbildenden Mittel findet eine Konzentration von 1-10 % Einsatz.

Weitere Griffe für Schlag- und Stoßwerkzeuge sind in US 5,490,437 und US 6,619,408 B1 beschrieben.

DE 299 04 043 U1 betrifft ein Einsatzgebiet, welches Stoß- und Schlagwerkzeugen verwandt ist, nämlich eine Maschine wie beispielsweise eine Schlagbohrmaschine, ein Schleifgerät o. ä. Eine Griffschale, die beispielsweise aus Kunststoff oder Metall gebildet ist, ist mit einer Oberflächenbeschichtung aus Polyurethan versehen, die eine unterschiedliche Zellstrukturierung aufweisen kann.

**Griffe für sonstige Einsatzzwecke**

US 4,023,606 offenbart eine Anordnung eines Blattes eines Eispickels in einer rohrförmigen Hülse. Ein geschäumtes Kunststoffmaterial ist zwischen die Hülse und den Schaft eingespritzt.

US 4,338,270 betrifft einen Griff für einen Golfschläger, der reibschlüssig auf den Schaft aufbringbar ist. Der Griff ist mit einer Hülse aus einem flexiblen Schaum gebildet, der radial außenliegend eine Oberflächenhaut ausbildet. Die nicht zellförmige oder poröse Außenhaut besitzt eine Dicke von ungefähr 0,005 Inch bis 0,020 Inch (0,127 bis 0,508 mm). Der Schaumbereich weist eine Härte von zwischen 55 und 65 Shore A auf. Die äußere Haut dient als Schutz gegen Abrasion oder Erosion des Griffs im Gebrauch. In einem Endbereich besitzt der Griff eine Kappe, die eine innenliegende sowie eine außenliegende Hülse besitzt, wobei die vorgenannten Hülsen über radial orientierte Rippen miteinander verbunden sind. Während die außenliegende Hülse die Mantelfläche im Endbereich bildet, dient die innenliegende Hülse einer Abstützung der Kappe an dem Schaft. Für die Kappe kommt ein Material mit einer Härte zwischen 70 und 90 Shore A zum Einsatz. Mögliche für den den Griff bildenden Schaum einsetzbare Materialien sind Polyurethan in Verbindung mit Polyol und Isocyanat. Als Treibmittel findet vorzugsweise Trichloromonofluoroethan Einsatz.

US 5,355,552 betrifft einen luftgefederten Griff für einen Tennisschläger, einen Hammer, ein Fahrrad o. ä. zur Absorption von Stößen. Hierzu besitzt der Griff Hohlkammern, in denen Luft, ggf. unter einem erhöhten Druck, angeordnet ist.

US 4,321,040 offenbart einen zweiteiligen Griff für ein medizinisches Gerät, bei dem zwischen einer flexiblen äußeren Hülse und einem Griffkern ein Verformungen ermöglichender Zwischenraum vorgesehen ist.

**AUFGABE DER ERFINDUNG**

Der Erfindung liegt die Aufgabe zugrunde, einen Handgriff für ein Werkzeug vorzuschlagen, der mit geringen Herstellungskosten und mit großer Lebensdauer einen guten Kompromiss zwischen

- einer Anpassbarkeit des Handgriffes an eine Hand des Benutzers und

- einer guten Kraftübertragung von Kräften des Benutzers

darstellt.

## LÖSUNG

Die Aufgabe der Erfindung wird erfindungsgemäß mit den Merkmalen des unabhängigen Patentanspruchs 1 gelöst. Weitere Ausgestaltungen der Erfindung ergeben sich entsprechend den abhängigen Ansprüchen 2 bis 19. Eine weitere Lösung der der Erfindung zugrunde liegenden Aufgabe stellt eine Verwendung gemäß dem Anspruch 20 dar.

## BESCHREIBUNG DER ERFINDUNG

Der Handgriff besitzt zunächst einen Griffkern, der einer festen Aufnahme eines Schaftes des Werkzeugs dient. Während der Schaft einer Übertragung von Kräften zu einer Funktionsfläche des Werkzeugs, beispielsweise einer Kellenfläche, einer Zangenbacke, einem Schraubendreher, einem Halter für ein Bit oder ähnlichem dient und beispielsweise mit Metall gebildet ist, dient der Griffkern der Anbindung des Handgriffes an dem Schaft, wobei zwischen Schaft und Griffkern eine dauerhafte Übertragung von Betätigungskräften ermöglicht werden muss. Durchaus möglich ist, dass der Griffkern einen Teil einer Mantelfläche des Handgriffes bildet, wobei in diesen Teilbereichen eine unmittelbare Übertragung von Kräften des Benutzers für den Griffkern zu dem Schaft gewährleistet ist. Beispielsweise handelt es sich bei derartigen Teilbereichen um eine endseitige Kuppe eines Handgriffes für einen Schraubendreher, über die mit einem Schlagwerkzeug Kräfte auf den Handgriff aufgebracht werden können. Oftmals sind derartige Teilbereiche auch in dem der Kuppe gegenüberliegenden Endbereich eines Handgriffes anzutreffen.

Der Griffkern ist mit einem Hartkunststoff gebildet, der eine erste Steifigkeit aufweist. Ein derartiger Griffkern kann beispielsweise auf den Schaft des Werkzeuges aufgespritzt werden und eine dauerhafte, stoffschlüssige und/oder formschlüssige Verbindung mit dem Schaft eingehen. Ebenfalls möglich ist, dass der Schaft auswechselbar in den Griffkern einsetzbar ist.

Um eine bessere Anpassbarkeit des Handgriffes an eine Hand eines Benutzers oder unterschiedlicher Hände unterschiedlicher Benutzer zu ermöglichen, besitzt der Handgriff eine in Umfangsrichtung umlaufende Mantelschicht. Dadurch, dass die Mantelschicht in Umfangsrichtung umläuft, können Trennfugen der Mantelschicht vermieden werden, die im Betrieb des Handgriffes mit Aufbringungen großer Kräfte auf die Außenfläche der Mantelschicht zu Quetschungen oder anderweitigen Verletzungen der Hand des Benutzers führen können.

Die Mantelschicht ist ebenfalls mit einem Kunststoff gebildet, der eine dritte Steifigkeit aufweist. Zwischen Griffkern und Mantelschicht ist in Teilumfangsbereichen zumindest eine Zwischenschicht angeordnet, die mit einem Kunststoff mit einer zweiten Steifigkeit gebildet ist. Die zweite Steifigkeit ist hierbei derart gewählt, dass diese kleiner ist als die erste Steifigkeit des Griffkerns und die dritte Steifigkeit der Mantelschicht. Die Mantelschicht ist erfindungsgemäß derart dimensioniert und die dritte Steifigkeit ist derart gewählt, dass bei einer Beaufschlagung des Handgriffs durch eine Hand eine Verformung sowohl der Mantelschicht als auch der Zwischenschicht erfolgt. Hierbei kann für die Dimensionierung der Mantelschicht beispielsweise eine (durchgehende oder variierende) Schichtdicke der Mantelschicht einschlägig sein.

Diese Ausgestaltung der Erfindung baut auf auf der Erkenntnis der Anmelderin entsprechend der Anmeldung WO 2006/069759 dahingehend, dass bei einer Gestaltung eines Handgriffs ein Zielkonflikt zu lösen ist:

- Einerseits wird die Anpassbarkeit eines Griffmantels an einer Hand eines Benutzers und an Hände unterschiedlicher Größen und damit Möglichkeiten einer Vergrößerung der Kontaktfläche zwischen Hand und Griffmantel vergrößert, wenn die Steifigkeit des den Handgriff bildende Materiales in radialer Richtung verringert wird.

- Andererseits ist für eine Übertragung großer Drehmomente über den Handgriff und/oder für eine auch bei harten Einsatzzwecken beständige Mantelfläche ein möglichst steifes oder hartes Material des Handgriffes gewünscht.

Während dieser Zielkonflikt gemäß dem Stand der Technik durch eine Steifigkeitsoptimierung nach Einzelfall Rechnung getragen wird oder aber durch

- Teilbereiche des Griffmantels mit hoher Steifigkeit, die vorrangig einer Übertragung des Drehmoments dienen, sowie

- Teilbereiche des Griffmantels mit geringer Steifigkeit, die die Haptik des Handgriffs verbessern sollen,

wird erfindungsgemäß zwar für die Mantelschicht ein verhältnismäßig steifes Material gewählt, das aber derart dimensioniert ist, dass dieses dennoch radial verformbar ist unter Beaufschlagung der Zwischenschicht. Demgemäß stützt die Zwischenschicht die Mantelschicht nicht möglichst steif ab und begrenzt damit mögliche Verformungen der Mantelschicht. Vielmehr stellt die Zwischenschicht eine radial nachgiebige Abstützung dar. Während der Stand der Technik dem Vorurteil folgt, dass bei einem Handgriff die Steifigkeit radial nach innen zunehmen muss, beschreitet damit die Erfindung den Weg, dass - zumindest in Teil-Umfangsbereichen - die Steifigkeit radial nach innen abnehmen kann. Durch die erfindungsgemäße Ausgestaltung kann ausgenutzt werden, dass durch Finger der Hand des Benutzers eine höhere spezifische Normalkraft ausgeübt werden kann als durch die Handfläche. Infolgedessen gibt die Mantelschicht im Bereich der Finger stärker nach als im Bereich der Handfläche, wodurch sich die Anlagefläche für die Finger vergrößern kann und im Bereich der Finger eine größere Kraft in den Handgriff eingeleitet werden kann. Infolge des unterschiedliche Nachgebens ist, im Querschnitt gesehen, der Handgriff stärker zur Handfläche gewölbt, was der Form einer natürlichen Handhöhlung entsprechen kann. Insgesamt kann erfindungsgemäß eine viel größere Kontaktfläche zwischen Handfläche und der Mantelfläche des Handgriffs ausgebildet werden als bei an dem Handgriff gemäß dem Stand der Technik.

Ein weiterer Aspekt der Erfindung widmet sich der Übertragung eines Umfangsmoments oder Betätigungsmoments, welches von dem Benutzer auf die Mantelschicht aufgebracht wird und zu dem Schaft übertragen werden soll. Obwohl, wie zuvor erläutert, eine gewisse radiale Nachgiebigkeit des Handgriffes gewährleistet ist, bildet die Mantelschicht mit der verhältnismäßig großen dritten Steifigkeit einen steifen "Ring", der ein derartiges Betätigungsmoment aufnehmen kann. Würde dieses Betätigungsmoment ausschließlich über eine weiche Zwischenschicht übertragen werden, würde sich für den Handgriff eine Federwirkung für wirkende Betätigungsmomente ergeben, die unerwünscht ist. Erfindungsgemäß wird eine derartige Federwirkung und die Zwischenschicht dadurch "überbrückt", dass eine unmittelbare Verbindung zwischen dem Griffkern und der Mantelschicht dadurch erzeugt wird, dass der Griffkern eine Teilmantelfläche aufweist, die stoffschlüssig und/oder formschlüssig unmittelbar mit der Mantelschicht verbunden ist.

Das erfindungsgemäße Prinzip kann durch eine theoretische Extremüberlegung veranschaulicht werden, für die sowohl Griffkern als auch Mantelschicht eine unendliche hohe Steifigkeit aufweisen. In diesem Fall ist unabhängig von einer kleinen Steifigkeit der Zwischenschicht eine starre Übertragung des Betätigungsmomentes zwischen Mantelschicht und Griffkern und damit Schaft ermöglicht. Durch eine Verringerung der Steifigkeit der Mantelschicht und/oder des Griffkerns von dem theoretischen Extremfall sowie durch die Dimensionierung der Teilmantelfläche und die Schichtdicke der Mantelschicht können gezielt und unter Umständen voneinander unabhängig

a) die radiale Nachgiebigkeit des Handgriffes und

b) die Steifigkeit der Übertragung eines Betätigungsmomentes

beeinflusst werden.

Entsprechend einem weiteren Aspekt der Erfindung stellt die Anbindung des Griffkernes an die Mantelschicht im Bereich der Teilmantelfläche unter Umständen ein Umfangssegment des Handgriffes bereit, in dem eine radiale Steifigkeit des Handgriffes gegenüber anderen Umfangssegmenten vergrößert ist. Damit können unter Umständen durch Gestaltung der Teilmantelfläche, Wahl der Zahl der Teilmantelflächen und deren Verteilung gezielte Steifigkeitsveränderungen des Handgriffes in Umfangsrichtung erzielt werden oder Steifigkeitscharakteristika erzielt werden, durch die Vorzugsrichtungen für Verformungen des in einer Hand angeordneten Handgriffes vorgegeben werden können.

Durch die erfindungsgemäße Ausgestaltung kann eine Fertigung ermöglicht sein mit folgenden Fertigungsschritten:

- Zunächst wird der Schaft in eine erste Form eingelegt, deren Kavität der gewünschten Geometrie des Griffkernes entspricht. Durch Einspritzen eines Hartkunststoffes mit der ersten Steifigkeit in die Form kann der Griffkern gefertigt werden, wobei gleichzeitig eine stoffschlüssige und/oder formschlüssige Verbindung zwischen Schaft, einem Übertragungsquerschnitt und Griffkern herbeigeführt werden kann.

- Anschließend an ein Aushärten des Griffkerns kann der mit dem Griffkern ummantelte Schaft in eine zweite Form eingelegt werden, wobei eine exakte Positionierung von Griffkern und Schaft in der zweiten Form u. U. dadurch herbeigeführt oder mitbestimmt werden kann, dass die Teilmantelfläche des Griffkernes für die spätere Verbindung mit der Mantelschicht an der Kavität der zweiten Form anliegt. In die zweite Form wird dann der Kunststoff mit der zweiten Steifigkeit zur Bildung der Zwischenschicht eingespritzt.

- Nach Aushärten der Zwischenschicht können der Schaft, der Griffkern und die Zwischenschicht in eine dritte Form eingelegt werden, in der dann die Mantelschicht durch Einspritzen des Kunststoffs mit der dritten Steifigkeit hergestellt wird.

Entsprechend einer Weiterbildung der Erfindung besitzt der Griffkern eine Rippe. Eine derartige Rippe kann sich in radialer Richtung oder unter Neigung zu einer radialen Richtung erstrecken und in Längsrichtung und/oder radialer Richtung veränderliche oder konstante Breite aufweisen. Die Rippe ist einstückig mit dem Griffkern ausgebildet und vorzugsweise durch Einspritzen des Hartkunststoffs in die erste Form hergestellt. Die Rippe bildet außenliegend die Teilmantelfläche, im Bereich welcher die stoffschlüssige und/oder formschlüssige Verbindung mit der Mantelschicht erfolgt. Mit einer derartigen Rippe kann auf einfache Weise die Überbrückung der Zwischenschicht gebildet werden. Andererseits stellt die Rippe einen Teilumfangsbereich mit vergrößerter radialer Steifigkeit des Handgriffes dar. Der Abstand der Teilmantelfläche von der Längsachse des Schraubendrehers kann variieren entsprechend der Außenkontur des Handgriffes, wodurch dafür Sorge getragen werden kann, dass zwischen der Mantelfläche des Handgriffes und der Teilmantelfläche der Rippe eine in Längsrichtung ungefähr konstante Dicke der Mantelschicht gegeben ist. Andererseits kann die Rippe genutzt werden, um den Griffkern mit dem Schaft bei der Herstellung in der zweiten Form auf Abstand zur Kavität zu halten.

Ebenfalls möglich ist, dass nicht nur eine Rippe an dem Griffkern vorgesehen ist, sondern 2, 3, 4 oder beliebig viele Rippen, die gleichförmig oder ungleichförmig über den Umfang verteilt sein können. Die Geometrie der Rippe(n) kann gezielt an das gewünschte Steifigkeitsverhalten im Übertragungsweg zwischen Mantelschicht und dem restlichen Griffkern und dem Schaft angepasst werden, wobei ein von der Rippe abweichender Teilquerschnitt des Griffkerns gezielt an die Einbettung des Schafts angepasst sein kann.

Alternativ oder zusätzlich zum Einsatz der zuvor erläuterten Rippe(n) kann der Griffkern selbst einen derartigen Querschnitt aufweisen, dass im Bereich einer maximalen Erstreckung der Griffkern unmittelbar an die Mantelschicht angrenzt. Beispielsweise ist der Griffkern ungefähr rechteckig ausgebildet, wobei die längere Seite des Rechtecks in erster Nährung dem inneren Durchmesser der Mantelschicht entspricht und die Teilmantelfläche zur Verbindung mit der Mantelschicht im Bereich der kürzeren Seite des Rechtecks gebildet ist. Eine derartige Ausgestaltung beruht auf einer einfachen Ausgestaltung der Kavität zur Vorgabe der Außenkontur des Griffkerns. Andererseits kann eine gute Abstützung zwischen Mantelschicht und Schaft gewährleistet werden.

Auf der Erfindung basierende Versuche haben gezeigt, dass ein Optimum für eine Gestaltung der Radialsteifigkeit und eine Gestaltung der Torsionssteifigkeit des Handgriffes gegeben ist, wenn eine Dicke der Mantelschicht, zumindest an der Stelle des größten Griffdurchmessers, ungefähr 30 bis 100 % der Dicke der Zwischenschicht beträgt. Vorzugsweise ist die Dicke der Mantelschicht 30 bis 65 % der Dicke der Zwischenschicht, insbesondere 40 bis 55 %.

Für eine erfindungsgemäße Weiterbildung des Handgriffes wird vorgeschlagen, dass der Handgriff zumindest an der Stelle des größten Griffdurchmessers eine unrunde Außenkontur besitzt. Derartige unrunde Außenkonturen ermöglichen eine verbesserte Anpassung an eine Hand eines Benutzers und/oder eine verbesserte Übertragung eines Betätigungsmomentes. Um auch eine Übertragung eines Betätigungsmoments in einem derartigen Fall zu gewährleisten, wird vorgeschlagen, dass die stoffschlüssige und/oder formschlüssige Verbindung zwischen der Teilmantelfläche des Griffkerns und der Mantelschicht in einem Bereich der Außenkontur erfolgt, in dem der Abstand der Außenkontur von einer Längsachse des Handgriffes maximal ist. Andererseits ist hier mit der Rippe auch der größte steife Hebelarm gegeben. Auf diese Weise können Übertragungswege zwischen dem Ort einer maximalen Aufbringung eines Betätigungsmoments durch eine Umfangskraft zu dem Griffkern und dem Schaft besonders kurz gehalten werden, wodurch sich eine steife Übertragung des Betätigungsmoments ergeben kann. Für eine Außenkontur des Handgriffs kommt alternativ zu einer einfachen kreisrunden Außenkontur insbesondere eine quadratische, achteckige, ovale oder hexagonale Kontur in Betracht. Für die quadratische, achteckige oder hexagonale Außenkontur erfolgt somit erfindungsgemäß eine Verbindung zwischen Teilmantelfläche des Griffkernes und Mantelschicht im Bereich einer Ecke, während für eine ovale Außenkontur eine Verbindung im Bereich der längeren Achse der ovalen Kontur erfolgt.

Ein weiterer Vorschlag der Erfindung basiert auf der Erkenntnis, dass das Material des Handgriffes im Bereich der Teilmantelfläche besonderen Beanspruchungen ausgesetzt ist, da hier bevorzugt Kräfte, insbesondere Scherkräfte bei Betätigungsmomenten, übertragen werden müssen. Diese Erkenntnis trägt eine weitere Ausgestaltung der Erfindung dadurch Rechnung, dass eine Rippe im Bereich der Teilmantelfläche eine Erweiterung aufweist, so dass die Breite der Rippe im Übergangsbereich zu der Mantelschicht vergrößert ist. Hierdurch kann die Teilmantelfläche für die stoffschlüssige Anbindung gezielt vergrößert werden, so dass die von der Kontaktfläche abhängige Spannung, insbesondere Scherspannung, verringert wird. Ebenfalls denkbar ist, dass die Teilmantelfläche eine besondere Querschnittskontur, beispielsweise mit Zähnen, Vorsprüngen oder Vertiefungen aufweist, wodurch eine zusätzliche formschlüssige Verbindung zwischen der Teilmantelfläche und der Mantelschicht geschaffen werden kann.

Alternativ oder kumulativ zu einer Vergrößerung des Kontaktbereiches zwischen Teilmantelfläche und Mantelschicht durch eine Erweiterung derselben kann ein radial außen liegender Endbereich der Rippe in die Mantelschicht eingebettet sein. Damit erfolgt eine Übertragung von Kräften nicht lediglich im Bereich einer radial außen liegenden Mantelfläche, sondern ebenfalls im Bereich von Seitenflächen der Rippen, was insbesondere einer guten Übertragung von Betätigungsmomenten zuträglich ist.

Bezüglich der Gestaltung der Steifigkeiten geht der Stand der Technik durchgängig den Weg, bei elastischen Zonen und/oder Schichten des Griffes einen Kunststoff entsprechend der herstellerseitig vorgegebenen Härte Shore A auszuwählen, wovon dabei ausgegangen wird, dass die Vorgabe des Materials mit der ausgewählten Härte Shore A und der Schichtdicke dieses elastischen Materials die Steifigkeit des Endproduktes "Griff' vorgegeben ist. An derartigen gemäß dem Stand der Technik bekannten Griffen, beispielsweise für Schraubendreher, kann im Bereich der Mantelfläche des Griffes eine Ermittlung der Härte Shore A mit einem an sich bekannten Shore-Härte-Prüfgerät erfolgen.

In dem Internet-Lexikon Wikipedia wird unter dem Eintrag "Härte" am 02.03.2007 zur Härte Shore ausgeführt, dass diese ein Werkstoffkennwert für Elastomere und Kunststoffe ist, welcher in den Normen DIN 53505 und DIN 7868 festgelegt. Das Kernstück des Shore-Härte-Prüfgeräts besteht aus einem federbelasteten Stift aus gehärtetem Stahl. Die Eindringtiefe in das zu prüfende Material ist ein Maß für die entsprechende Shore-Härte, die auf einer Skala von 0 Shore (2,5 mm Eindringtiefe) bis 100 Shore (0 mm Eindringtiefe) gemessen wird. Eine hohe Zahl bedeutet damit eine große Härte. Die Materialdicke sollte im Bereich von 0-50 Shore mindestens 9 mm betragen, bei härteren Substanzen mindestens 6 mm. Für die Messung Shore A erfolgt der Einsatz eines Stiftes mit abgestumpfter Spitze. Die Stirnfläche des Kegelstumpfes im Bereich der Spitze besitzt einen Durchmesser von 0,79 mm und der Öffnungswinkel beträgt 35°.

Die Anmelderin hat erkannt, dass die Ermittlung der Härte Shore A für die Ermittlung der relevanten Steifigkeit der hier vorliegenden Griffe u. U. (alleine) unzureichend sind. Dies liegt darin begründet, dass bei bekannten Shore-Härte-Prüfgeräten der elastisch abgestützte Stift seitlich von einer Referenzfläche umgeben ist. Das Härte-Prüfgerät wird dann mit einer Anpresskraft an den Prüfling angelegt, bis die Referenzfläche den Prüfling kontaktiert. Besitzt allerdings der Prüfling unter der mit dem Prüfgerät in Wechselwirkung tretenden Außenschicht eine verhältnismäßig weiche Zwischenschicht, kann während der Härteprüfung nach Shore durch den Stift und/oder die Referenzfläche eine Kraft ausgeübt werden, die auch zu Verformungen dieser weichen Zwischenschicht führt, welche eine Bewegung der mit dem Prüfgerät in Wechselwirkung tretenden Außenschicht zur Folge hat. Somit ermittelt das Härteprüfgerät nach Shore zwar einen charakteristischen Härtewert. Dieser ist jedoch kleiner als der Härtewert des für die Außenschicht verwendeten Kunststoffes. Nicht ausreichend gemessen wird die radiale Gesamtsteifigkeit des Griffes, für die die Härte des für die Außenschicht verwendeten Kunststoffes lediglich eine beeinflussende Größe darstellt. Das in der vorliegenden Anmeldung beschriebene Messverfahren erfasst die gesamte radiale Verformbarkeit besser, weil es einen größeren Bereich des Griffquerschnittes, nämlich die gesamte radiale Erstreckung des Griffs im Querschnitt, in die Messung einbezieht. Anders gesagt hat die Anmelderin beobachtet, dass eine Härte einer Mantelschicht des Griffes, die hoch ist, aber eine geringe Schichtdicke hat, bei weicher Abstützung der Mantelschicht für den Benutzer auf dieselbe spürbare radiale Steifigkeit führen kann wie eine weichere Mantelschicht, die dicker ausgebildet ist und/oder etwas härter abgestützt ist. Für die vorgenannten Varianten kann die Härteprüfung nach Shore (allein) auf die Ergonomie nicht beschreibende Härten führen, während erfindungsgemäß eine charakteristische Größe ermittelt werden soll, die die tatsächlich für den Benutzer des Griffes erfahrbare Steifigkeit und Ergonomie abbilden soll.

Erfindungsgemäß wird das folgende Prüfverfahren vorgeschlagen:

- Zunächst wird der Griff weitestgehend ohne Last eingespannt zwischen einer Anlagefläche, beispielsweise einem Tisch, und einem Prüfkopf. Infolge der Einspannung ergeben sich zwei Kontaktflächen auf der Mantelfläche des Griffes, vorzugsweise im Bereich des größten Durchmessers des Griffes. Die beiden vorgenannten Kontaktflächen liegen sich ungefähr diametral auf der Mantelfläche des Griffes gegenüber. Durch das weitestgehend belastungsfreie Einspannen kann ein Referenzabstand der Kontaktflächen vorgegeben werden (gleiches könnte auch durch Einspannen mit einer vorgegebenen Einspannkraft erfolgen, die kleiner ist als die später genannte definierte Anpresskraft). Der Prüfkopf ist im Bereich der Kontaktfläche vorzugsweise kugelförmig ausgebildet, wobei ein Durchmesser 8 mm betragen kann.

- Anschließend wird eine definierte Anpresskraft des Prüfkopfes auf die Mantelfläche des Griffes in radialer Richtung des Griffes aufgebracht, wobei diese Anpresskraft vorzugsweise 30 Newton beträgt.

- Schließlich wird ein sich infolge der definierten Anpresskraft ergebender veränderter Abstand zwischen der Anlagefläche und dem Prüfkopf ermittelt.

Mit dem sich ergebenden veränderten Abstand ist somit ein "integrales" Maß für sämtliche Verformungen über den gesamten Durchmesser des Griffes gegeben, welcher zuvor nicht erfasst worden ist.

Gemäß einer ersten Ausgestaltung der Erfindung beträgt der vorgenannte veränderte Abstand zwischen 2,5 und 7 mm, beispielsweise zwischen 3 und 6 mm (oder 3,0 und 5,5 mm oder 3,5 und 5 mm) für einen Griff, dessen unbelasteter Durchmesser zwischen 25 und 40 mm, beispielsweise 30 bis 40 mm oder 33 bis 37 mm, im Bereich seines größten Durchmessers beträgt.

Entsprechend einer Weiterbildung eines erfindungsgemäßen Handgriffes ist der infolge des zuvor erläuterten Prüfverfahrens veränderte Abstand des Griffes im Bereich der Ecken um 2 bis 30 %, insbesondere 2,5 bis 6 % größer als im Bereich der Flanken. Ein derartiges Verhältnis der Steifigkeiten hat sich als vorteilhaft hinsichtlich der übertragbaren Momente und der Ergonomie des Griffes herausgestellt.

Für den Fall, dass trotz einer verhältnismäßigen weichen elastischen Zwischenschicht ein dauerbeständiges Elastizitätsverhalten gewünscht ist, findet ein Kunststoff ohne Weichmacher für die Zwischenschicht Einsatz, so dass unerwünschte Diffusionen aus der Zwischenschicht vermieden sind.

Für einen besonderen Einsatzzweck des erfindungsgemäßen Handgriffes ist dieser Teil eines Schraubendrehers, für den somit eine besonders gute Übertragung von Kräften und Betätigungsmomenten ermöglicht ist.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

## KURZBESCHREIBUNG DER FIGUREN

Im Folgenden wird die Erfindung anhand in den Figuren dargestellter bevorzugter Ausführungsbeispiele weiter erläutert und beschrieben.

Fig. 1    zeigt einen erfindungsgemäßen Handgriff in einem Längsschnitt, bei dem ein Griffkern zwei in Umfangsrichtung gegenüberliegende Rippen aufweist.

Fig. 2    zeigt den Handgriff gemäß Fig. 1 in einem Querschnitt.

Fig. 3    zeigt einen weiterhin erfindungsgemäßen Handgriff im Querschnitt, der einen in erster Näherung rechteckförmigen Griffkern besitzt.

Fig. 4    zeigt einen weiteren erfindungsgemäßen Handgriff Im Querschnitt, der einen Griffkern mit lediglich einer Rippe besitzt.

Fig. 5    zeigt einen weiteren erfindungsgemäßen Handgriff in einem Querschnitt, wobei ein rechteckförmiger Griffkern außermittig angeordnet ist und lediglich im Bereich einer kurzen Seite des Rechtecks mit der Mantelschicht in Wirkverbindung steht.

Fig. 6    zeigt einen weiteren erfindungsgemäßen Handgriff in einem Querschnitt, bei dem der Griffkern zwei Rippen besitzt, die im Übergangsbereich zu der Mantelschicht eine Erweiterung aufweisen.

Fig. 7    zeigt einen weiteren erfindungsgemäßen Handgriff in einem Querschnitt, bei dem Endbereiche von Rippen eines Griffkerns in die Mantelschicht eingebettet sind.

Fig. 8    zeigt eine Vorrichtung zur Prüfung der radialen Gesamtsteifigkeit eines Griffes eines Schraubendrehers in schematischer Darstellung.

Fig. 9    zeigt ein Detail IX für den Kontaktbereich für einen Prüfkopf mit einer Mantelfläche des Griffes für die Vorrichtung gemäß Fig. 8, wobei die ausgeübte Kontaktkraft ungefähr 0 beträgt.

Fig. 10    zeigt ein Detail X für den Kontaktbereich für einen Prüfkopf mit einer Mantelfläche des Griffes für die Vorrichtung gemäß Fig. 8, wobei die erforderliche Anpresskraft des Prüfkopfes auf die Mantelfläche des Griffes aufgebracht ist.

## FIGURENBESCHREIBUNG

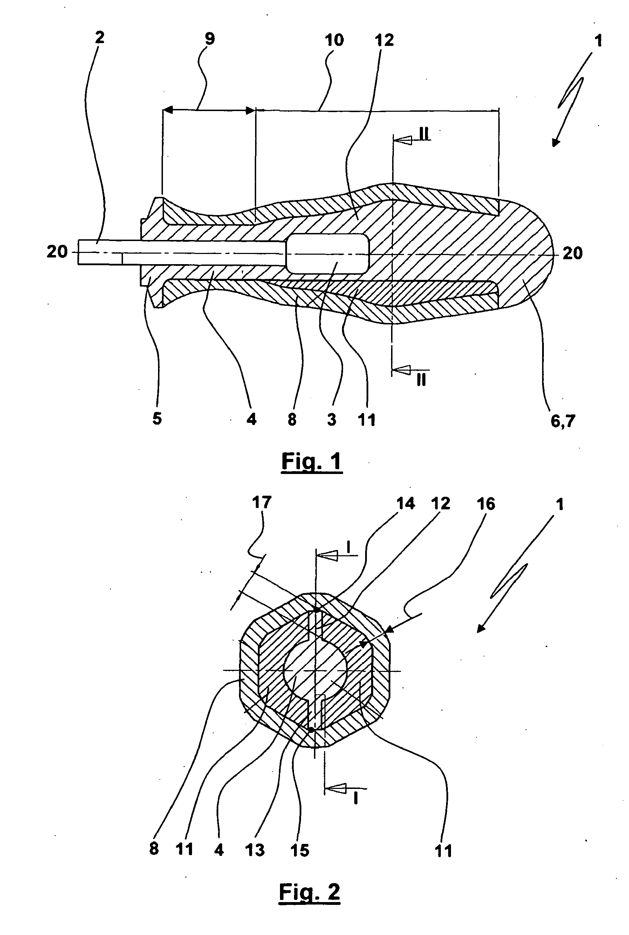

**Fig. 1 und 2** zeigen eine erste Ausführungsform eines erfindungsgemäßen Handgriffs 1. Der Handgriff 1 besitzt einen Schaft 2, der in dem Inneren des Handgriffs 1 einen unrunden Übertragungsquerschnitt 3 besitzt. Der Schaft 2 ist in dem Handgriff 1 ummantelt von einem Griffkern 4, aus dem der Schaft aus einem vorderen Endbereich 5 auskragt. Sowohl in dem vorderen Endbereich 5 als auch in einem hinteren Endbereich 6 ist mit dem Griffkern 4 eine Außenfläche des Handgriffes 1 gebildet. Im hinteren Endbereich 6 bildet der Griffkern 4 eine Kuppe 7 mit ungefähr halbkugelförmiger Außenkontur. Zwischen den Endbereichen 5, 6 ist die Außenfläche des Handgriffes 1 mit einer Mantelschicht 8 gebildet. Während die Mantelschicht 8 über eine Länge 9 unmittelbar stoffschlüssig an eine zylinderförmige oder unrunde Mantelfläche des Griffkerns 4 angebunden ist, sind zwischen Mantelschicht 8 und Griffkern 4 über eine Länge 10 Kammern gebildet, in denen eine Zwischenschicht 11 oder mehrere Zwischenschichten 11 angeordnet ist/sind. Im Bereich der Länge 10 besitzt der Griffkern 4 Rippen 12, 13, die die Zwischenschicht 11 durchsetzen. Die Rippen 12, 13 besitzen eine radial außen liegende Teilmantelfläche 14, 15 im Bereich welcher die Rippen 12, 13 stoffschlüssig mit der Mantelschicht 8 verbunden sind. Für das in den Fig. 1 und 2 dargestellte Ausführungsbeispiel besitzen die Rippen 12, 13 eine in radialer Richtung konstante Breite, die bspw. ungefähr 0,5 bis 5 mm, vorzugsweise 1 bis 4 mm und insbesondere 1,5 bis 3 mm beträgt. Eine Dicke 16 der Mantelschicht 8 beträgt ungefähr 30 % bis 100 % der Dicke 17 der Zwischenschicht 11, gemessen an der Stelle des größten Griffdurchmessers, s. Kennzeichnung Querschnitt II-II in Fig. 1. In Längsrichtung kann die Dicke 16 der Mantelschicht 8 konstant sein oder veränderlich. Für das in Fig. 2 dargestellte Ausführungsbeispiel ist die Außenkontur des Handgriffes 1 ungefähr hexagonal ausgebildet mit Abflachungen der Ecken, was zur Folge hat, dass die Außenfläche der Mantelschicht 8, die Innenfläche der Mantelschicht 8 und die Außenfläche der Zwischenschicht 11 ebenfalls hexagonal mit Abflachungen im Bereich der Ecken ausgebildet sind. Die Teilmantelflächen 14, 15 stehen im Bereich der Abflachungen der Innenfläche der Mantelschicht 8 in Wirkverbindung mit der Mantelschicht 8.

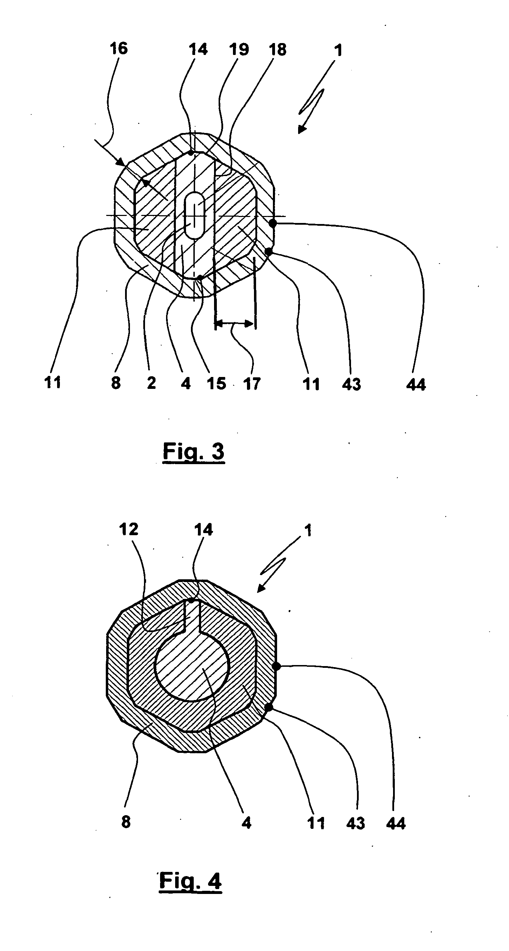

**Fig. 3** zeigt eine weitere Ausgestaltung eines Handgriffes 1 im Querschnitt, bei der der Griffkern 4 ohne Rippen ausgebildet ist. Stattdessen besitzt der Griffkern 4 eine in erster Nährung als rechteckförmig zu bezeichnende Außenkontur. Längsseiten 18 der rechteckförmigen Außenkontur entsprechen ungefähr dem Abstand der korrespondierenden Teilbereiche der Innenflächen der Mantelschicht 8, während Kurzseiten 19 an die Kontur der Innenflächen der Mantelschicht 8 im Bereich der abgeflachten Ecken derselben angepasst sind. Für das Verhältnis der Dicken 16, 17 gilt das zuvor Gesagte.

In dem in **Fig. 4** dargestellten Ausführungsbeispiel besitzt der Griffkern 4 lediglich eine Rippe 12, im Bereich welcher der Griffkern 4 mit der Mantelschicht 8 in Wirkverbindung tritt. Dies hat zur Folge, dass in einer 12-Uhr-Orientierung gemäß Fig. 4 die Steifigkeit durch den Griffkern 4 mit Rippe 12 sowie die Mantelschicht 8 vorgegeben ist, so dass sich in dieser Orientierung eine verhältnismäßig große Steifigkeit ergibt, während für abweichende Orientierungen zwischen Mantelschicht 8 und Griffkern 4 die Zwischenschicht 11 zwischengeschaltet ist, so dass sich über den gesamten abweichenden Umfangsbereich eine verringerte Steifigkeit ergibt. Während für die in Fig. 2 und 3 dargestellten Querschnitte damit eine Verformung des Handgriffes in vertikaler Richtung in den Figuren nur mit großer Steifigkeit möglich ist, wird zwar gemäß Fig. 4 die Oberseite über die Rippe 12 steif abgestützt. Dennoch ist durch das Fehlen der Rippe 13 in der 6-Uhr-Stellung eine Verformung des Handgriffes 1 in vertikaler Richtung ermöglicht, so dass die Möglichkeiten für eine Anpassung des Handgriffes 1 an eine Hand eines Benutzers erweitert sind.

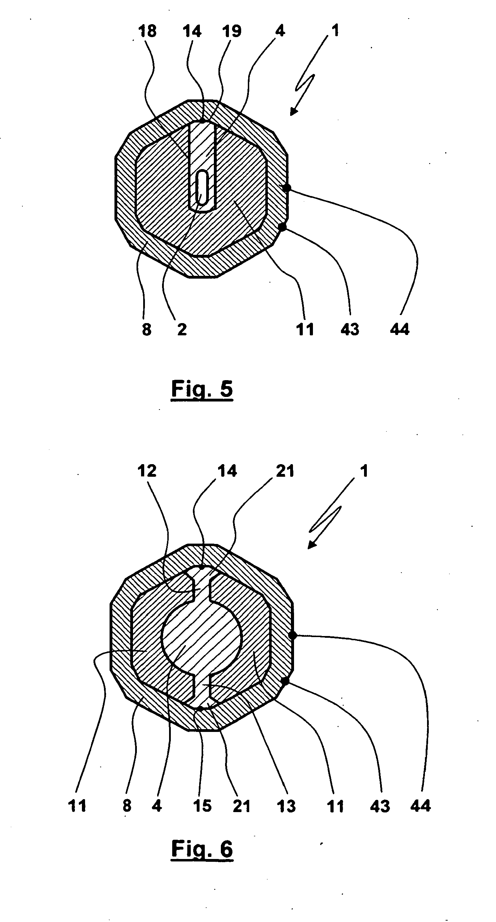

**Fig. 5** zeigt eine entsprechende Ausführungsform eines Handgriffes 1 mit einem in erster Nährung rechteckförmigen Griffkern, welcher in diesem Fall "außermittig" angeordnet ist und lediglich auf der oberen Kurzseite 19 (12-Uhr-Stellung) die Mantelschicht 8 kontaktiert, während in der 6-Uhr-Orientierung zwischen Griffkern 4 und Mantelschicht 8 Material der Zwischenschicht 11 angeordnet ist. Eine derartige Ausgestaltung kann beispielsweise dadurch erzielt werden, dass der rechteckförmige Querschnitt des Griffkernes 4 gegenüber einer Längsachse 20-20 im Bereich der Länge 10 gekrümmt ist.

**Fig. 6** zeigt eine weitere Ausgestaltungsmöglichkeit eines Handgriffes 1, bei dem die Rippen 12, 13 radial außenliegend Erweiterungen 21 besitzen, in Folge derer die Teilmantelflächen 14, 15, in denen der Griffkern 4 mit der Mantelschicht 8 in Wechselwirkung tritt, vergrößert sind. Vorzugsweise sind Formhälften der ersten Form zur Vorgabe einer Kavität für den Griffkern 4 in einer in Fig. 6 vertikal orientierten Ebene geteilt, die durch die Mitte der Rippen verläuft. Von dieser Teilungsebene weg verjüngen sich die Erweiterungen 21, ohne Hinterschneidungen zu bilden, so dass die Formhälften ohne Einsatz von Kernen oder ähnliches von dem Griffkern auf einfache Weise zu entfernen sind.

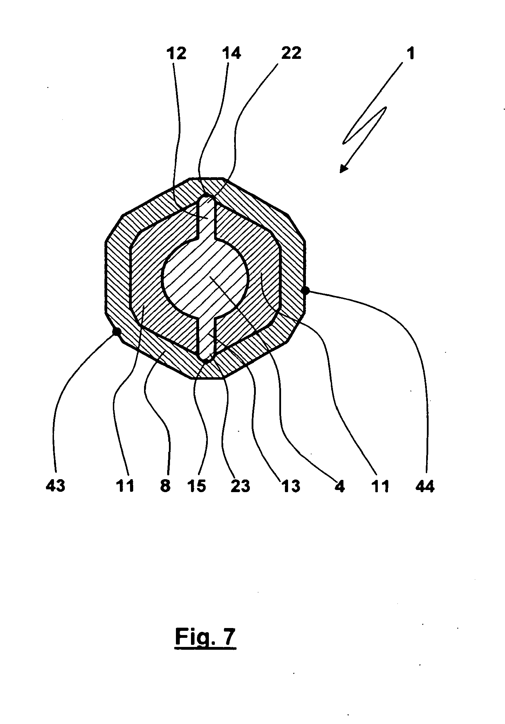

Schließlich zeigt **Fig. 7**, dass sich die Rippen 12, 13 mit Endbereichen 22, 23 bis in die Mantelschicht 8 erstrecken können, so dass die Rippen 12, 13 endseitig in die Mantelschicht 8 eingebettet sind. Im Bereich der Rippen 12, 13, also 12-Uhr-Orientierung und 6-Uhr-Orientierung ist demgemäß die Dicke der Mantelschicht 8 verringert. Eine derartige Verringerung beträgt bspw. 10 bis 50% oder insbesondere 15 bis 40% der anderweitigen Schichtdicke der Mantelschicht.

In den Figuren ist die Zwischenschicht als eine radial durchgehende Schicht ausgebildet, wobei mehrere Teilbereiche der Zwischenschicht in Umfangsrichtung verteilt sein können und durch Rippen 12, 13 unterbrochen sein können. Ebenfalls möglich ist, dass für die Zwischenschicht mehrere radial aneinander anschließende Teilschichten oder beliebige andere Materialien, beispielsweise Verbundmaterialien, zum Einsatz kommen können. Für sämtliche Materialien kann ein Material mit einer geschlossenen Struktur eingesetzt sein. Insbesondere für die Zwischenschicht 11 ist ebenfalls die Möglichkeit eines Einsatzes eines porösen Materials möglich.

Vorzugsweise besitzt der Griffkern (4) mindestens ein gestaltetes Elemente, beispielsweise eine Rippe, durch welches der Griffkern (4) direkt mit der Mantelschicht verbunden ist. Dieses Element kann der unmittelbaren Einleitung einer Kraft, bspw. einer Torsionskraft und/oder einer Querkraft, von der Mantelschicht in den Griffkern dienen.

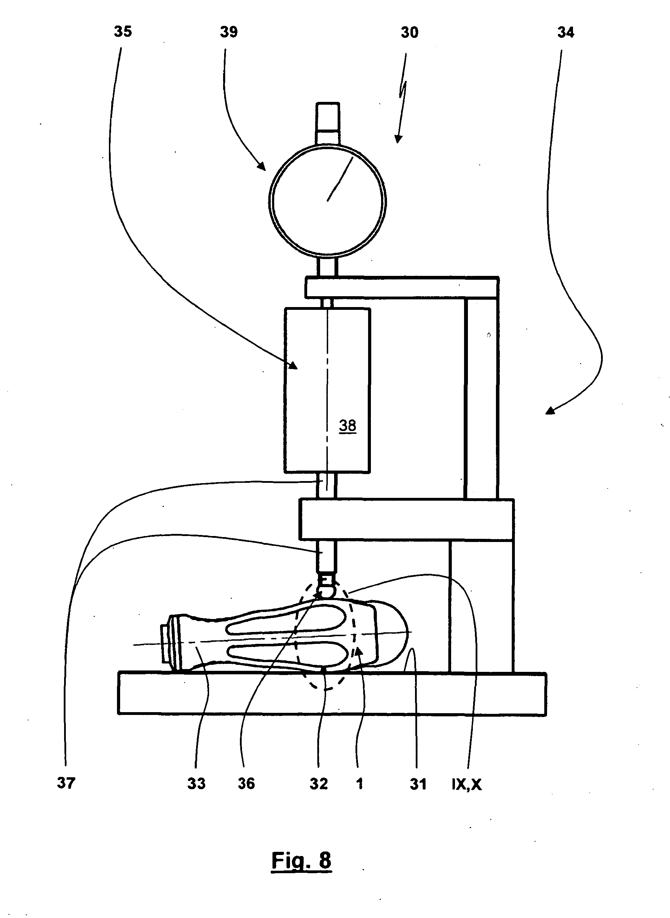

**Fig. 8** zeigt eine Vorrichtung 30 zum Prüfen einer sich ergebenden Gesamtsteifigkeit eines Griffes 1 in radialer Richtung. Die Vorrichtung 30 besitzt eine Anlagefläche 31, auf der der Griff 1 aufliegt. Hierbei stützt sich der Griff 1 ausschließlich oder hauptsächlich an einer Kontaktfläche 32 ab, die von der Mantelfläche 33 des Griffes 1 gebildet ist. In einer Trageinheit 34 ist in vertikaler Richtung unter möglichst geringer Reibung verschieblich ein Messorgan 35 geführt. Das Messorgan 35 besitzt einen Messkopf 36, der starr mit Führungsstangen 37, die gegenüber dem Messorgan 35 in vertikaler Richtung geführt sind, und einem Gewicht 38 gekoppelt ist. Eine Verschiebung des Messkopfes 36 in vertikaler Richtung wird von einem Sensor 39, beispielsweise einer Messuhr, erfasst. Möglich ist, dass das Gewicht 38 veränderbar ist, beispielsweise durch Entfernung oder Ergänzung von Teilgewichten.

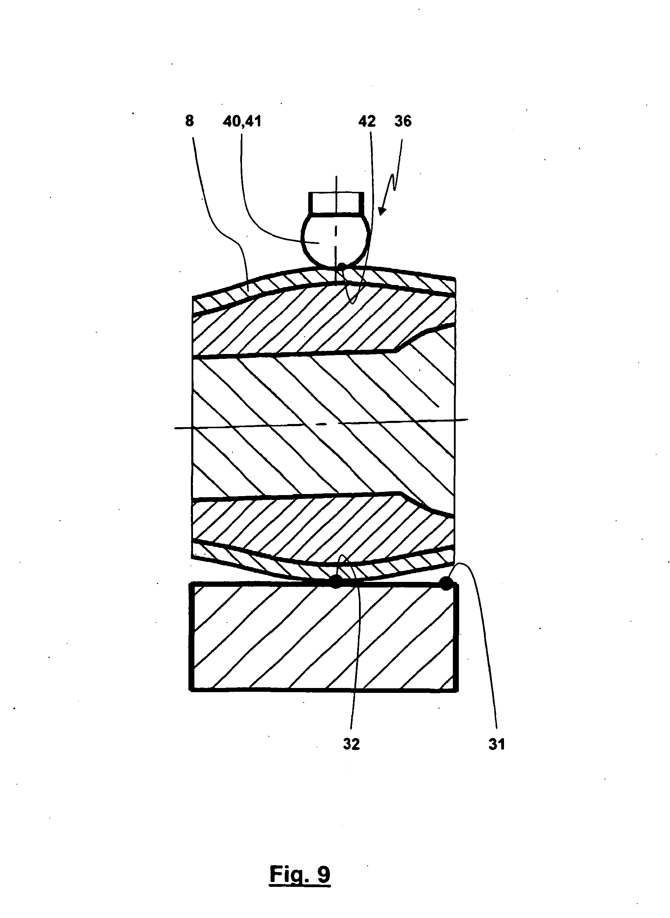

Wie in **Fig. 9** zu erkennen ist, besitzt der Messkopf 36 einen Kontaktkörper 40, der für das dargestellte Ausführungsbeispiel mit einer Kugel oder Teilkugel 41 gebildet ist. Möglich ist, dass in dem Messkopf 36 unterschiedliche Kontaktkörper 40 mit unterschiedlichen Geometrien, Flächen, Querschnitten und Krümmungen im Kontaktbereich mit dem Griff 1, 17 austauschbar gehalten werden können. Für den Fall des Einsatzes einer Kugel 41 als Kontaktkörper 40 ergibt sich eine Art Hertz'scher Kontakt zwischen dem Messkopf 36 und dem Griff 1.

Für eine Ermittlung der Steifigkeit des Gesamtgriffs in radialer Richtung wird entsprechend Fig. 8 ein Griff 1 auf die Anlagefläche 31 gelegt, wofür das Messorgan 35 vertikal angehoben wird. Eine Ausrichtung des Griffes 1 erfolgt derart, dass der Umfangsbereich der Mantelfläche 33, von dem ausgehend eine radiale Steifigkeit ermittelt werden soll, auf der Anlagefläche 31 aufliegt. Eine derartige Ausrichtung kann manuell oder automatisiert, beispielsweise mit einem Schrittmotor zur Herbeiführung einer Rotation des Schraubendrehers, erfolgen. Ist die gewünschte Ausrichtung des Schraubendrehers und des Griffes 1 erreicht, wird das Messorgan 35 abgesenkt, bis der Messkopf 36 im Bereich einer Kontaktfläche 42 zur Anlage an die Mantelfläche 33 des Griffes 1 kommt, was in Fig. 9 dargestellt ist. Fig. 9 zeigt hierbei ein Anliegen des Messkopfes 36 mit verschwindender Kraftausübung.

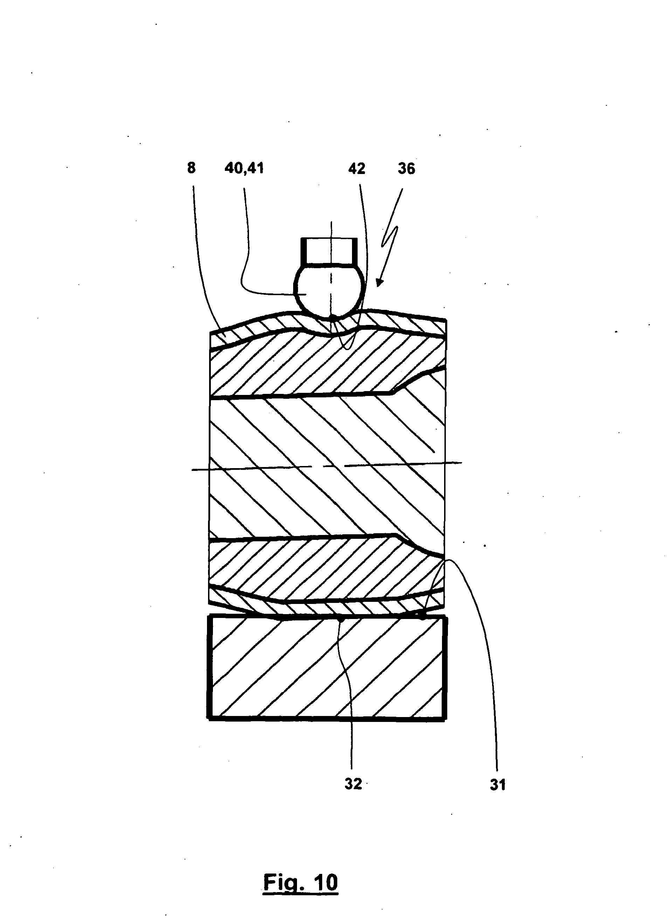

Mit Freigabe der Gewichtskraft des Gewichtes 38 kommt es zu einer Verformung des Griffes 1 in radialer Richtung, was in **Fig. 10** schematisch dargestellt ist. Hierbei wirkt die durch die Gewichtskraft ausgeübte Kontaktkraft als Druckspannung im Bereich des Durchmessers, welcher die Kontaktfläche 42 des Messkopfes 36 mit der Mantelfläche des Griffes 1 mit der Kontaktfläche 32 des Griffes 1 mit der Anlagefläche 31 verbindet. Die vorgenannten Druckspannungen führen zu einer Verformung über den vorgenannten Durchmesser. Die Verformungen im Bereich des Durchmessers, also einzelne Verformungen der einzelnen, im Griff vorhandenen Schichten, kumulieren zu einer Gesamtverschiebung, welche über den Sensor 39 oder die Messuhr erfasst wird.

Entsprechend einer beispielhaften Ausführungsform, welche für die in der Anmeldung angeführten Messungen Einsatz gefunden hat, besitzt die Kugel einen Durchmesser von 8 mm. Das Gewicht 38 (und weitere zugeordnete, mitbewegte Bauelemente) besitzt eine Masse von 3 kg.

Die durchgeführten Untersuchungen haben für erfindungsgemäße Griffe 1 gezeigt, dass sich Verformungen, also Veränderungen des Abstands $\Delta D$ der Kontaktfläche 42 des Messkopfes 36 mit der Mantelfläche 33 des Griffes 1 und der Kontaktfläche 32, der im Folgenden mit $D_V$ (Durchmesser vor Aufbringung der Gewichtskraft) und $D_N$ (Durchmesser nach Aufbringung der Gewichtskraft) bezeichnet ist, wie folgt ergeben:

$$\Delta D = D_V + D_N$$

mit $\Delta D$ im Bereich von 2,5 bis 7 mm, insbesondere 3 bis 5,5 mm.

Bei Definition eines Grades der Verformbarkeit $G = \Delta D/D_V$ ergeben sich insbesondere Werte von G im Bereich von 8,5 % $\pm$ 2 % für Griffe mit großen Griffdurchmessern (maximale Durchmesser von 33 bis 40 mm), während sich ein Grad G im Bereich von 20 % $\pm$ 5 % für Griffe mit kleinen Griffdurchmessern (maximale Durchmesser von 25 bis 33 mm) ergeben.

Im Bereich des größten Griffdurchmessers ergibt sich auf der Oberfläche des Griffes, aber außerhalb einer durch radiale Stege ausgesteiften Zone, eine gemessene Härte Shore A zwischen 20 und 40 %, insbesondere zwischen 25 und 38 %. Das Messverfahren auf Grundlage der in Fig. 8 dargestellten Vorrichtung 30 bezieht gegenüber einer üblichen Messung einer Härte Shore A einen größeren Bereich der Griffoberfläche in die Messung ein. Weiterhin erfolgt eine Messung mit einer größeren Kraft infolge des Gewichts 38 als bei einer üblichen Härtemessung Shore A.

In der folgenden Tabelle sind beispielhafte Prüfergebnisse für unterschiedliche Prüfverfahren und unterschiedliche Griffe dargestellt, wobei die Länge L die Gesamtlänge des Griffes bezeichnet und der Durchmesser Ø den Durchmesser des Griffes an dem größten von der Hand umfassten Bereich des Griffes bezeichnet. Die erste und zweite Gruppe der Proben besitzt einen Griffaufbau gemäß Fig. 3 in der nicht vorveröffentlichten Anmeldung der Anmelderin mit dem Aktenzeichen DE 10 2007 010 972.7, während die in der dritten Gruppe dargestellten Proben hingegen einen Aufbau entsprechend Fig. 8 und 9 der genannten Anmeldung mit einer verhältnismäßig dicken Mantelschicht besitzen. Für mehrere Proben gleichen Aufbaus sind in den jeweiligen Zeilen unterschiedliche Messergebnisse aufgelistet. Für die jeweiligen Proben ist zunächst die Materialhärte des verwendeten Kunststoffs für die Innenschicht sowie die Außenschicht in Härte Shore A angegeben. In den folgenden beiden Spalten ist die mit dem hier neu vorgeschlagenen Prüfverfahren ermittelte Verformung, also $\Delta D$, angegeben, und zwar einmal im Bereich der Mitte einer Flanke des Griffes 44 und einmal im Bereich einer Ecke 43.

Dem gegenübergestellt ist in den folgenden Spalten die ermittelte Härte Shore A im Bereich der Flanke/Ecke. Ein ergänzender Messwert ist angegeben für eine Ermittlung der Härte Shore A über einem Steg 5d gemäß Figur 3 der genannten Anmeldung.

| Griffgröße | Materialhärte Shore A | | Verformung | | Härte Shore A | |
|---|---|---|---|---|---|---|
| | Innenschicht | Außenschicht | Flanke 44 | Ecke 43 | Flanke/Ecke | über Radialsteg |
| L =106 mm Ø = 37 mm (Griffaufbau gemäß Fig. 3 in DE 10 2007 010972.7) | 20 | 40 | 5,4 mm 5,8 mm | 5,7 mm 5,9 mm | 23/24 22/23 | 40 40 |
| L =106 mm Ø = 35 mm (Griffaufbau gemäß Fig. 3 in DE 10 2007 010 972.7) | 25 18/20 18/20 18/20 18/20 | 58 55/58 55/58 55/58 55/58 | 3,1 mm 4,0 mm 3,5 mm 4,0 mm 3,9 mm | 4,0 mm 4,3 mm 4,3 mm 4,2 mm 4,4 mm | 35/41 30/30 31/35 35/36 32/36 | 58 50 51 53 49 |
| L =100 mm Ø = 34 mm (Griffaufbau gemäß Fig. 8/9 in DE 10 2007 010 972.7) | 20 21 20 | 40 41 55 | 4,9 mm 4,9 mm 2,5 mm | 4,5 mm 4,5 mm 2,7 mm | 28/32 29/32 50/53 | 40 41 55 |

Weitere Merkmale hinsichtlich der Ausgestaltung der Griffe sowie der Herstellung derselben sind den Anmeldungen der Anmelderin zu entnehmen. Insbesondere offenbart DE 10 2006 037 688 einen Griff für ein Werkzeug, bei dem ein Steg oder eine Rippe stoffschlüssig an die Innenfläche einer Mantelschicht angebunden ist. DE 10 2006 038 636 offenbart eine Herstellung eines Griffes unter Einsatz eines PUR-Verfahrens, wobei Grundkomponenten des den Griff oder eine Schicht bildenden Kunststoffes in einer Form mit einem Treibmittel reagieren.

DE 10 2006 061 068 offenbart die Vorgabe von Volumenänderungsräumen für ein Aufschäumen des mit einem Treibmittel versehenen Kunststoffes während der Herstellung des Griffes. Derartige Volumenänderungsräume können beispielsweise durch das Öffnen einer Form oder das Einlegen des Griffes oder einer Komponente desselben vor einem endgültigen Aushärten des eine Schicht oder den Griff bildenden Materials geschaffen werden. Schließlich schlägt DE 10 2005 055 981 die Ausbildung des Griffes mit radialen, kissenartigen elastischen Auswölbungen zur Verbesserung der Ergonomie des Griffes. Die vorgenannten Aspekte der Patentanmeldungen der Anmelderin lassen sich problemlos in die Ausgestaltungen gemäß der vorliegenden Erfindung integrieren.

**BEZUGSZEICHENLISTE**

1 Handgriff
2 Schaft
3 Übertragungsquerschnitt
4 Griffkern
5 vorderer Endbereich
6 hinterer Endbereich
7 Kuppe
8 Mantelschicht
9 Länge
10 Länge
11 Zwischenschicht

| 12 | Rippe |
|---|---|
| 13 | Rippe |
| 14 | Teilmantelfläche |
| 15 | Teilmantelfläche |
| 16 | Dicke Mantelschicht |
| 17 | Dicke Zwischenschicht |
| 18 | Längsseite |
| 19 | Kurzseite |
| 20 | Längsachse |
| 21 | Erweiterung |
| 22 | Endbereich Rippe |
| 23 | Endbereich Rippe |
| 30 | Vorrichtung |
| 31 | Anlagefläche |
| 32 | Kontaktfläche |
| 33 | Mantelfläche |
| 34 | Trageinheit |
| 35 | Messorgan |
| 36 | Messkopf |
| 37 | Führungsstange |
| 38 | Gewicht |
| 39 | Sensor |
| 40 | Kontaktkörper |
| 41 | Kugel |
| 42 | Kontaktfläche |
| 43 | Ecke |
| 44 | Flanke |

**Patentansprüche**

1. Handgriff für ein Werkzeug mit

   a) einem Griffkern (4), in dem ein Schaft (2) des Werkzeuges aufgenommen ist,
   b) einer in Umfangsrichtung umlaufenden Mantelschicht (8) und
   c) mindestens einer zwischen Griffkern (4) und Mantelschicht (8) angeordneten Zwischenschicht (11), wobei
   d) der Griffkern (4) mit einem Hartkunststoff mit einer ersten Steifigkeit gebildet ist,
   e) die Mantelschicht (8) mit einem Kunststoff mit einer dritten Steifigkeit gebildet ist und
   f) die mindestens eine Zwischenschicht (11) mit einem Kunststoff mit einer zweiten Steifigkeit gebildet ist, die kleiner ist als die erste Steifigkeit und die dritte Steifigkeit,
   g) und die Mantelschicht (8) derart dimensioniert ist und die dritte Steifigkeit derart gewählt ist, dass bei einer Beaufschlagung des Handgriffes durch eine Hand eine Verformung sowohl der Mantelschicht (8) als auch der Zwischenschicht (11) erfolgt,
   **dadurch gekennzeichnet, dass**
   h) der Griffkern (4) eine Teilmantelfläche (14, 15) aufweist, die stoffschlüssig und/oder formschlüssig mit der Mantelschicht (8) verbunden ist, und
   i) die Zwischenschicht lediglich in einem Teilumfangsbereich oder mehreren Teilumfangsbereichen angeordnet ist.

2. Handgriff nach Anspruch 1, **dadurch gekennzeichnet, dass** die Teilmantelfläche (14, 15) des Griffkerns (4) von einer Rippe (12, 13) des Griffkernes (4) gebildet ist.

3. Handgriff nach Anspruch 1, **dadurch gekennzeichnet, dass** die Teilmantelfläche (14, 15) des Griffkerns (4) mit einem Bereich maximaler Erstreckung des Querschnittes des Griffkernes, insbesondere der kürzeren Seite (19) eines ungefähr rechteckigen Querschnittes des Griffkerns (4), gebildet ist.

4. Handgriff nach einem der vorhergehenden Ansprüche, **dadurch gekennzeichnet, dass** zumindest an der Stelle des größten Griffdurchmessers eine Dicke (16) der Mantelschicht (8) ungefähr 30% bis 100% der Dicke (17) der Zwischenschicht (11) beträgt.

**5.** Handgriff nach einem der vorhergehenden Ansprüche, **dadurch gekennzeichnet, dass** der Handgriff zumindest an der Stelle des größten Griffdurchmessers eine unrunde Außenkontur, insbesondere eine erster Näherung hexagonale Außenkontur, besitzt und eine stoffschlüssige und/oder formschlüssige Verbindung zwischen der Teilmantelfläche (14, 15) des Griffkerns (4) und der Mantelschicht (8) im Bereich eines maximalen Abstandes der Außenkontur von einer Längsachse (20-20) des Handgriffs, insbesondere im Bereich einer Ecke der hexagonalen Außenkontur, angeordnet ist.

**6.** Handgriff nach einem der Ansprüche 2, 4 und 5, **dadurch gekennzeichnet, dass** die Rippe (12, 13) im Bereich der Teilmantelfläche (14, 15) eine Erweiterung (21) aufweist.

**7.** Handgriff nach einem der Ansprüche 2, 4, 5 und 6, **dadurch gekennzeichnet, dass** die Mantelschicht (8) eine ungefähr konstante Dicke (16) aufweist und sich die Stirnseite der Rippe (12, 13) bis an eine Innenfläche der Mantelschicht (8) erstreckt.

**8.** Handgriff nach einem der Ansprüche 2, 4, 5, 6 und 7, **dadurch gekennzeichnet, dass** ein radial außen liegender Endbereich (22, 23) der Rippe (12, 13) in die Mantelschicht (8) eingebettet ist.

**9.** Handgriff nach einem der vorhergehenden Ansprüche, **dadurch gekennzeichnet, dass** die Mantelschicht (8) mit einem Elastomer-Kunststoff gebildet ist, der eine Härte im Bereich von 40-80 Shore A besitzt.

**10.** Handgriff nach einem der vorhergehenden Ansprüche, **dadurch gekennzeichnet, dass** die Zwischenschicht (11) mit einem Elastomer-Kunststoff gebildet ist, der eine Härte im Bereich von 15-40 Shore A besitzt.

**11.** Handgriff nach einem der vorhergehenden Ansprüche, insbesondere nach Anspruch 10 in Rückbeziehung auf Anspruch 9, **dadurch gekennzeichnet, dass** die Härte des für die Mantelschicht (8) gewählten Kunststoffes mindestens 20 Shore A größer ist als des für die Zwischenschicht (11) gewählten Kunststoffes.

**12.** Handgriff nach einem der vorhergehenden Ansprüche, **dadurch gekennzeichnet, dass**

a) die Härten der eingesetzten Kunststoffe und die Dicken der Querschnittsbereiche so gewählt sind, dass der Griff im Bereich seines größten Durchmessers eine radiale Steifigkeit besitzt, die bei Prüfung entsprechend dem folgenden Prüfverfahren:

aa) belastungsfreies Einspannen von zwei von der Mantelfläche des Griffes gebildeten Kontaktflächen (32, 42), die sich diametral auf der Mantelfläche des Griffes gegenüberliegen, zwischen einer Anlagefläche (31) und einem Prüfkopf (36), wobei der Prüfkopf (36) im Bereich der Kontaktfläche (42) kugelförmig mit einem Durchmesser von 8 mm ist,
ab) Aufbringen einer definierten Anpresskraft des Prüfkopfes (35) von 30 N auf die Mantelfläche des Griffes in radialer Richtung des Griffes,
ac) Erfassen des sich infolge der definierten Anpresskraft ergebenden veränderten Abstandes $\Delta D$ zwischen der Anlagefläche (31) und dem Prüfkopf (36).

derart ist, dass
b) der veränderte Abstand $\Delta D$ zwischen 2,5 und 7 mm bei einem größten Durchmesser $D_v$ des Griffs zwischen 25 und 40 mm beträgt.

**13.** Handgriff nach Anspruch 12, **dadurch gekennzeichnet, dass** der veränderte Abstand $\Delta D$ zwischen 3 und 5,5 mm beträgt.

**14.** Handgriff nach Anspruch 13, **dadurch gekennzeichnet, dass** die radiale Steifigkeit im Bereich der Ecken kleiner ist als im Bereich der Flanken.

**15.** Handgriff nach Anspruch 14, **dadurch gekennzeichnet, dass** der veränderte Abstand $\Delta D$ des Griffs im Bereich der Ecken um 2 bis 30% größer ist als im Bereich der Flanken, insbesondere 2,5 bis 6 % größer ist als im Bereich der Flanken.

**16.** Handgriff nach Anspruch 13, **dadurch gekennzeichnet, dass** die radiale Steifigkeit im Bereich der Ecken größer ist als im Bereich der Flanken.

**17.** Handgriff nach Anspruch 16, **dadurch gekennzeichnet, dass** der veränderte Abstand ΔD des Griffs im Bereich der Flanken um 2 bis 30% größer ist als im Bereich der Ecken, insbesondere 2,5 bis 6 % größer ist als im Bereich der Ecken.

**18.** Handgriff nach Anspruch 13, **dadurch gekennzeichnet, dass** die radiale Steifigkeit über den Umfang ungefähr konstant ist, insbesondere für einen in erster Näherung kreisförmigen Querschnitt oder einen Querschnitt in Form eines Vielecks.

**19.** Handgriff nach einem der vorhergehenden Ansprüche, **dadurch gekennzeichnet, dass** die Zwischenschicht diffusionsfrei oder diffusionsarm mit einem Kunststoff ohne Weichmacher ausgebildet ist.

**20.** Verwendung eines Handgriffes gemäß einem der Ansprüche 1 bis 19 für einen Schraubendreher oder ein anderes Werkzeug oder Gerät, mit dem ein Drehmoment übertragen wird.

**Claims**

**1.** Handle for a tool with

a) a core (4) housing a shank (2) of the tool,
b) a cover layer (8) extending along the entire circumference and
c) at least one intermediate layer (11) located between the core (4) and the cover layer (8), wherein
d) the core (4) is built by a hard plastic material having a first stiffness,
e) the cover layer (8) is built by a plastic material having a third stiffness and
f) the at least one intermediate layer (11) is built by a plastic material having a second stiffness which is smaller than the first stiffness and the third stiffness,
g) and the cover layer (8) is dimensioned and the third stiffness is chosen such that under the bias of the handle by a hand both the cover layer (8) as well as the intermediate layer (11) are deformed,
**characterised by**
h) the core (4) comprising a partial outer surface (14, 15) which is adhesively connected and/or connected by a positive lock with the cover layer (8), and
i) the intermediate layer being solely located in a partial circumferential region or a plurality of partial circumferential regions.

**2.** Handle according to claim 1, wherein the partial outer surface (14, 15) of the core (4) is built by a rib (12, 13) of the core (4).

**3.** Handle according to claim 1, wherein the partial outer surface (14, 15) of the core (4) is built in a region with a maximum of the extension of the cross-section of the core, in particular in the region of the shorter side (19) of an approximately rectangular cross-section of the core (4).

**4.** Handle according to one of claims 1 to 3, wherein at least at the largest diameter of the handle the thickness (16) of the cover layer (8) is approximately 30 % to 100 % of the thickness (17) of the intermediate layer (11).

**5.** Handle according to one of claims 1 to 4, wherein the handle at least at the largest diameter of the handle comprises a non-circular outer contour, in particular an outer contour which is in a first approximation hexagonal, and an adhesive and/or a non-positive lock is located between the partial outer surface (14, 15) of the core (4) and the cover layer (8) in the region of the maximum of the distance of the outer contour from a longitudinal axis (20-20) of the handle, in particular in the region of a corner of the hexagonal outer contour.

**6.** Handle according to one of claims 2, 4 and 5, wherein the rib (12, 13) comprises an extension (21) in the region of the partial outer surface (14, 15).

**7.** Handle according to one of claims 2, 4, 5 and 6, wherein the cover layer (8) comprises an approximately constant thickness (16) and the front surface of the rib (12, 13) extends up to an inner surface of the cover layer (8).

8. Handle according to one of claims 2, 4, 5, 6 and 7, wherein a radial outer end region (22, 23) of the rib (12, 13) is embedded into the cover layer (8).

9. Handle according to one of claims 1 to 8, wherein the cover layer (8) is built by an elastomeric plastic material having a hardness in the region of 40-80 shore A.

10. Handle according to one of claims 1 to 9, wherein the intermediate layer (11) is built by an elastomeric plastic material having a hardness in the region of 15-40 shore A.

11. Handle according to one of claims 1 to 10, in particular handle according to claim 10 referring back to claim 9, wherein the hardness of the plastic material used for the cover layer (8) is at least 20 shore A higher than the hardness of the plastic material chosen for the intermediate layer (11).

12. Handle according to one of claims 1 to 11, wherein

   a) the hardnesses of the used plastic materials and the thicknesses of the cross-sectional regions are chosen such that for a test according to the following test procedure:

   aa) load-free clamping of two contact surfaces (32, 42) built by the outer surface of the handle between a contact surface (31) and a test head (36), wherein the contact surfaces (32, 42) are positioned in diametrically opposite positions on the outer surface of the handle and wherein in the region of the contact surface (42) the test head (36) is spherical with a diameter of 8 mm,
   ab) application of a defined pressing force of the test head (35) of 30 N upon the outer surface of the handle in radial direction of the handle,
   ac) sensing a changed distance $\Delta D$ between the contact surface (31) and the test head (36) caused by the defined pressing force

   the handle in the region of its largest diameter comprises a radial stiffness such that
   b) the changed distance $\Delta D$ is between 2.5 and 7 mm wherein the largest diameter $D_v$ of the handle is between 25 and 40 mm.

13. Handle according to claim 12, wherein the changed distance $\Delta D$ is between 3 and 5.5 mm.

14. Handle according to claim 13, wherein the radial stiffness is smaller in the region of the corners than in the region of the flanks or sides.

15. Handle according to claim 14, wherein the changed distance $\Delta D$ of the handle in the region of the corners is 2% to 30 % larger than in the region of the flanks or sides, in particular 2.5 to 6 % larger.

16. Handle according claim 13, wherein the radial stiffness is lager in the region of the corners than in the region of the flanks or sides.

17. Handle according to claim 16, wherein the changed distance $\Delta D$ of the handle in the region of the flanks or sides is 2% to 30 % larger than in the region of the corners, in particular 2.5 to 6 % larger.

18. Handle according to claim 13, wherein the radial stiffness is approximately constant along the circumference, in particular for a cross-section being circular in a first approximation or for a cross-section of a polygon.

19. Handle according to one of claims 1 to 18, wherein the intermediate layer is built by a plastic material having no softener for beeing diffusion-free or having only a small rate of diffusion.

20. Use of a handle according to one of claims 1 to 19 for a screw driver or another tool or device used for transferring a torsional moment.

**Revendications**

1. Poignée pour un outil, avec

a) une âme de poignée (4), dans laquelle est reçue une queue (2) de l'outil,

b) une couche d'enveloppe (8) périphériquement entourante et

c) au moins une couche intermédiaire (11) disposée entre l'âme de poignée (4) et la couche d'enveloppe (8), sachant

d) que l'âme de poignée (4) est formée d'une matière plastique dure ayant une première rigidité,

e) que la couche d'enveloppe (8) est formée d'une matière plastique ayant une troisième rigidité et

f) que la couche intermédiaire au moins unique (11) est formée d'une matière plastique dure ayant une deuxième rigidité qui est inférieure à la première rigidité et à la troisième rigidité,

g) et que la couche d'enveloppe (8) est dimensionnée de telle sorte, et la troisième rigidité est choisie de telle sorte, qu'une déformation tant de la couche d'enveloppe (8) que de la couche intermédiaire (11) a lieu lorsque la poignée est sollicitée par une main, **caractérisée en ce que**

h) l'âme de poignée (4) présente une surface d'enveloppe partielle (14, 15) qui est reliée par liaison de matière et/ou par complémentarité de forme à la couche d'enveloppe (8), et

i) la couche intermédiaire est disposée uniquement dans une ou plusieurs régions périphériques partielles.

**2.** Poignée selon la revendication 1, **caractérisée en ce que** la surface d'enveloppe partielle (14, 15) de l'âme de poignée (4) est formée par une nervure (12, 13) de l'âme de poignée (4).

**3.** Poignée selon la revendication 1, **caractérisée en ce que** la surface d'enveloppe partielle (14, 15) de l'âme de poignée (4) est formée par une région d'étendue maximale de la section de l'âme de poignée, en particulier par le côté le plus court (19) d'une section approximativement rectangulaire de l'âme de poignée (4).

**4.** Poignée selon l'une des revendications précédentes, **caractérisée en ce qu'**au moins dans la zone de plus grand diamètre de la poignée, l'épaisseur (16) de la couche d'enveloppe (8) est égale à environ 30% à 100% de l'épaisseur (17) de la couche intermédiaire (11).

**5.** Poignée selon l'une des revendications précédentes, **caractérisée en ce que** la poignée possède au moins dans sa zone de plus grand diamètre un contour extérieur non circulaire, en particulier un contour extérieur hexagonal en première approximation, et une liaison de matière et/ou positive entre la surface d'enveloppe partielle (14, 15) de l'âme de poignée (4) et la couche d'enveloppe (8) est disposée dans la région d'une distance maximale entre le contour extérieur et un axe longitudinal (20-20) de la poignée, en particulier dans la région d'un coin du contour extérieur hexagonal.

**6.** Poignée selon l'une des revendications 2, 4 et 5, **caractérisée en ce que** la nervure (12, 13) présente un élargissement (21) dans la région de la surface d'enveloppe partielle (14, 15).

**7.** Poignée selon l'une des revendications 2, 4, 5 et 6, **caractérisée en ce que** la couche d'enveloppe (8) présente une épaisseur (16) approximativement constante, et le côté frontal de la nervure (12, 13) s'étend jusqu'à une face intérieure de la couche d'enveloppe (8).

**8.** Poignée selon l'une des revendications 2, 4, 5, 6 et 7, **caractérisée en ce qu'**une région terminale radialement extérieure (22, 23) de la nervure (12, 13) est incorporée dans la couche d'enveloppe (8).

**9.** Poignée selon l'une des revendications précédentes, **caractérisée en ce que** la couche d'enveloppe (8) est formée d'une matière plastique élastomère qui possède une dureté dans la plage de 40 à 80 Shore A.

**10.** Poignée selon l'une des revendications précédentes, **caractérisée en ce que** la couche intermédiaire (11) est formée d'une matière plastique élastomère qui possède une dureté dans la plage de 15 à 40 Shore A.

**11.** Poignée selon l'une des revendications précédentes, notamment selon la revendication 10 en rattachement à la revendication 9, **caractérisée en ce que** la dureté de la matière plastique choisie pour la couche d'enveloppe (8), d'au moins 20 Shore A, est supérieure à celle de la matière plastique choisie pour la couche intermédiaire (11).

**12.** Poignée selon l'une des revendications précédentes, **caractérisée en ce que**

a) les duretés des matières plastiques utilisées et les épaisseurs des zones de section sont choisies de telle sorte que la poignée possède, dans la région de son plus grand diamètre, une rigidité radiale qui, lors d'un contrôle conformément à la méthode de contrôle suivante :

aa) serrage sans sollicitation de deux surfaces de contact (32, 42), formées par la surface d'enveloppe de la poignée en étant diamétralement opposées sur la surface d'enveloppe de la poignée, entre une surface d'appui (31) et une tête de contrôle (36), sachant que la tête de contrôle (36) est, dans la région de la surface de contact (42), sphérique avec un diamètre de 8 mm,

ab) exercice d'une force d'application définie de 30 N de la tête de contrôle (35) sur la surface d'enveloppe de la poignée, dans la direction radiale de la poignée,

ac) détermination de la distance modifiée $\Delta D$ entre la surface d'appui (31) et la tête de contrôle (36) qui est obtenue du fait de la force d'application définie,

est telle que

b) la distance modifiée $\Delta D$ est comprise entre 2,5 et 7 mm pour un plus grand diamètre $D_v$ de la poignée compris entre 25 et 40 mm.

13. Poignée selon la revendication 12, **caractérisée en ce que** la distance modifiée $\Delta D$ est comprise entre 3 et 5,5 mm.

14. Poignée selon la revendication 13, **caractérisée en ce que** la rigidité radiale est plus petite dans la région des coins que dans la région des flancs.

15. Poignée selon la revendication 14, **caractérisée en ce que** la distance modifiée $\Delta D$ de la poignée dans la région des coins est plus grande de 2 à 30% que dans la région des flancs, en particulier est plus grande de 2,5 à 6% que dans la région des flancs.

16. Poignée selon la revendication 13, **caractérisée en ce que** la rigidité radiale est plus grande dans la région des coins que dans la région des flancs.

17. Poignée selon la revendication 16, **caractérisée en ce que** la distance modifiée $\Delta D$ de la poignée dans la région des flancs est plus grande de 2 à 30% que dans la région des coins, en particulier est plus grande de 2,5 à 6% que dans la région des coins.

18. Poignée selon la revendication 13, **caractérisée en ce que** la rigidité radiale est approximativement constante sur le pourtour, en particulier pour une section circulaire en première approximation ou une section sous la forme d'un polygone.

19. Poignée selon l'une des revendications précédentes, **caractérisée en ce que** la couche intermédiaire est réalisée non diffusante ou peu diffusante avec une matière plastique sans plastifiant.

20. Utilisation d'une poignée selon l'une des revendications 1 à 19 pour un tournevis ou un autre outil ou appareil avec lequel est transmis un couple de rotation.

**Fig. 1**

**Fig. 2**

16    14   19   18         1

11    8   2   4   15   17   11   43   44

**Fig. 3**

12        14        1

8            4      11   43   44

**Fig. 4**

18　14　19　4　　1

8　2　　11　43　44

**Fig. 5**

12　14　21　1

11　8　4　15　21　13　11　43　44

**Fig. 6**

12   14   22                    1

43   11   8   15   23   13   4   11   44

**Fig. 7**

35    39    30    34

38

37    33    36    32    1    31    IX,X

**Fig. 8**

8    40,41                42    36

**Fig. 9**

32                31

**Fig. 10**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US PS2871899 A
- DE 9202550 U1
- DE 4304965 A1
- DE 29515833 U1
- DE 19539200 A1
- DE 29517276 U1
- DE 29900746 U1
- DE 29904082 U1
- EP 0627974 B1
- US 2871899 A
- DE 69421765 T2
- EP 0635337 B1
- EP 1314519 A1
- DE 3525163 C2
- EP 0208942 A2
- EP 0358883 A1
- US 3189069 A
- WO 0043166 A
- EP 1163088 B1
- DE 202004019156 U1
- EP 0538632 A1
- US 6370986 B1
- US 3770033 A
- DE 10113368 A1
- DE 19732421 C2
- US 20030172498 A1
- US 5490437 A
- US 6619408 B1
- DE 29904043 U1
- US 4023606 A
- US 4338270 A
- US 5355552 A
- US 4321040 A
- WO 2006069759 A
- DE 102007010972
- DE 102006037688
- DE 102006038636
- DE 102006061068
- DE 102005055981